# FASCICULE DE BREVET EUROPEEN

(11) **EP 4 235 628 B1**
(45) Date de publication et mention de la délivrance du brevet: **03.01.2024**
(21) Numéro de dépôt: 23177449.8
(22) Date de dépôt: 08.06.2015
(51) Int. Cl.: G09B 9/00, G06Q 50/00, G09B 9/04, G09B 9/042, G09B 9/32

(54) **SYSTÈME DE CRÉATION D'UN ENVIRONNEMENT**
SYSTEM ZUR ERZEUGUNG EINER UMGEBUNG
SYSTEM FOR CREATING AN ENVIRONMENT

(43) Date de publication de la demande: 30.08.2023
(62) Demande divisionnaire de: 15733364.2
(73) Titulaire: Battlekart Europe, 7711 Mouscron (Dottignies) (BE)
(72) Inventeur: MILLECAM, Sébastien, 7711 Dottignies (BE); LUCAS, Ludovic, 7021 Havré (BE)
(74) Mandataire: Gevers Patents

(56) Documents cités:
- EP-A1- 2 848 895
- US-A1- 2008 259 096
- US-A1- 2010 245 233
- Pionneau Fabien: "Un vrai projet de karting façon Mario Kart ! Karts électriques et vidéoprojection du circuit.", Les Numeriques, 3 août 2013 (2013-08-03), pages 1-5, XP55903053, FR Extrait de l'Internet: URL:https://www.lesnumeriques.com/loisirs/ vrai-projet-karting-facon-mario-kart-n3056 1.html [extrait le 2022-03-18]
- Pionneau Fabien: "Un vrai projet de karting façon Mario Kart ! Karts électriques et vidéoprojection du circuit.", Les Numeriques, 3 August 2013 (2013-08-03), pages 1-5, XP55903053, FR Retrieved from the Internet: URL:https://www.lesnumeriques.com/loisirs/ vrai-projet-karting-facon-mario-kart-n3056 1.html [retrieved on 2022-03-18]

## Description

### Domaine technique

La présente invention concerne un système et un procédé de création d'un environnement dans lequel une image projetée par un système de projection peut être modifiée selon la position d'un ou plusieurs éléments mobiles déterminée par un système de localisation.

### Art antérieur

Les systèmes de karting actuels comprennent une piste marquée sur le sol et des karts qui roulent sur cette piste. Malheureusement, la piste est matérialisée sur le sol par des éléments fixes, qui sont longs à installer et à enlever, comme de la peinture ou des autocollants. Il n'est donc pas possible de rapidement changer de piste à un endroit donné. De plus, les karts peuvent entrer en collision les uns avec les autres ou avec des obstacles fixes. En outre, une course de karting est amusante mais répétitive et le karting à un seul kart n'a guère d'intérêt ludique.

Il y a donc un besoin de proposer un système de création d'environnement permettant de mettre en oeuvre un karting qui ne présente pas ces inconvénients. À cet effet, un système de karting indoor avec projection au sol est présenté dans un article publié en ligne le 03 août 2013 sur le site Les Numériques par Fabien Pionneau et intitulé « Un vrai projet de karting façon Mario Kart ! Karts électriques et vidéoprojection du circuit. » (https://www.lesnumeriques.com/loisirs/vrai-projet-karting-facon-mario-kart-n30561.html). Dans car article, un circuit de karting est projeté au sol par des projecteurs, ce qui permet d'éviter la matérialisation dudit circuit. L'article divulgue aussi indépendamment, d'une part l'usage d'un bouton pour disposer des pièges sur le circuit, et d'autre part l'usage de capteurs afin d'envoyer la position du kart à un logiciel et agir sur sa vitesse en conséquence.

L'environnement créé au moyen du système divulgué dans l'article suscité peut toutefois être amélioré.

### Exposé de l'invention

L'invention propose à cet effet un système de création d'un environnement, l'environnement comprenant au moins une image agencée pour être perceptible par au moins un pilote d'au moins un élément mobile, le système comprenant:
- l'au moins un élément mobile, qui lui-même comprend une interface électronique et au moins un moyen d'action connecté à l'interface électronique,
- un système de projection agencé pour projeter l'au moins une image,
- un système de localisation agencé pour déterminer une position de chaque élément mobile présent à proximité de l'au moins une image, et
- un serveur agencé pour être connecté à l'interface électronique de chaque élément mobile, au système de localisation et au système de projection, le serveur étant agencé pour contrôler le système de projection et ledit au moins un moyen d'action sur base de la position de chaque élément mobile reçue du système de localisation.

Le système de projection permet de projeter une image, comme une image de piste de karting, qui est remplaçable très rapidement. Il est donc très facile de demander au serveur d'indiquer au système de projection qu'une nouvelle image de piste doit être affichée. De plus, le système de localisation permet de localiser les éléments mobiles qui peuvent être des karts. Leur localisation est envoyée au serveur qui peut agir sur les karts, via leur moyen d'action, pour modifier leur mouvement et empêcher une collision. L'environnement créé est amélioré car le serveur peut indiquer au système de projection comment modifier l'image pour l'adapter à la position des karts et peut agir sur les karts, via leur moyen d'action, pour en modifier certaines caractéristiques, ce qui rend le karting attrayant, même pour un joueur seul, et rend le karting encore plus attrayant lorsqu'il est pratiqué à plusieurs.

Avantageusement, chaque élément mobile comprend en outre au moins un actionneur connecté à l'interface électronique et agencé pour être actionné par le pilote de l'élément mobile, le serveur étant agencé pour agir sur le système de projection et sur l'au moins un moyen d'action sur base d'un actionnement d'au moins un actionneur. L'actionneur permet au pilote de donner des instructions à l'élément mobile, instructions qui peuvent être transférées au serveur via l'interface et l'ordinateur de bord. Cela permet au pilote d'agir sur l'environnement et au serveur de connaitre les instructions du pilote.

Avantageusement, le système de projection comprend au moins un ordinateur de flux vidéo et au moins un projecteur, chaque ordinateur de flux vidéo étant connecté au serveur et chaque projecteur étant connecté à l'ordinateur de flux vidéo. Une telle réalisation du système de projection permet qu'une grande partie des calculs nécessaires pour générer l'image soient réalisés par les ordinateurs de flux vidéo, ce qui assure une bonne répartition des charges de calcul, notamment si le système de projection comprend un grand nombre de projecteurs afin que l'image couvre une grande surface.

Avantageusement, le système de projection comprend une pluralité de projecteurs, chacun des projecteurs étant agencé pour projeter une image partielle telle que l'ensemble des images partielles projetées par les projecteurs forme l'image. Cela permet d'obtenir une image qui couvre une grande surface, suffisamment lumineuse pour être perçue convenablement par les pilotes et dans laquelle les pixels ne sont pas trop visibles. Avantageusement, les images partielles se recouvrent au moins partiellement. Cela permet d'éviter des zones non-couvertes par l'image en bordure des images partielles de chacun des projecteurs.

Avantageusement, le système de localisation comprend au moins un microcontrôleur connecté au serveur et au moins un capteur connecté au microcontrôleur. Le microcontrôleur sert notamment de relais entre le capteur et le serveur. Avantageusement, une connexion entre chaque capteur et le microcontrôleur auquel le capteur est connecté utilise I2C. La connexion par I2C rend le transfert de données du capteur vers le microcontrôleur rapide et fiable.

Avantageusement, une connexion entre chaque microcontrôleur et le serveur utilise Ethernet. La connexion par Ethernet rend le transfert de données du microcontrôleur vers le serveur rapide et fiable. De plus, L'Ethernet permet le transfert de données sur des grandes distances. En outre, l'Ethernet permet de transporter, via l'utilisation de Power over Ethernet (PoE), l'alimentation électrique des capteurs.

Avantageusement, chaque capteur comprend une caméra agencée pour prendre une image et capable de détecter le rayonnement infra-rouge. La localisation marche particulièrement bien avec ce type de rayonnement.

Avantageusement, le capteur comprend en outre un dispositif de traitement de données agencé pour augmenter la résolution de l'image prise par la caméra. Avantageusement, le système comprend en outre un système d'identification du capteur grâce auquel le serveur est capable d'identifier le capteur duquel une information lui parvient parmi une pluralité de capteurs. Cela permet au serveur d'identifier immédiatement le capteur émetteur de l'information, sans même à devoir lire l'information en elle-même.

Avantageusement, chaque capteur est connecté à un système d'affichage comprenant une pluralité de diodes électroluminescentes, le capteur et le système d'affichage auquel il est connecté étant agencés pour l'allumage d'un nombre de diodes égal au nombre d'éléments mobiles perçus par le capteur. Cela permet de facilement tester les capteurs et d'estimer facilement les limites de leur surface de captation.

Avantageusement, chaque élément mobile comprend en outre un émetteur. L'émetteur permet une excellente localisation de l'élément mobile par le système de localisation. Avantageusement, l'émetteur comprend au moins une source de rayonnement électromagnétique. Avantageusement, la source de rayonnement électromagnétique comprend un émetteur infra-rouge. La localisation marche particulièrement bien avec ce type de rayonnement.

Avantageusement, chaque source de rayonnement électromagnétique comprend une diode électroluminescente d'une puissance comprise entre 5 et 50 watt. La localisation marche particulièrement bien avec ce type de rayonnement.

Avantageusement, la connexion entre l'interface électronique et le serveur passe par un ordinateur de bord.

Avantageusement, l'au moins un élément mobile est un kart et l'image comprend une piste de karting.

L'invention propose en outre un procédé de création d'un environnement, l'environnement comprenant au moins une image agencée pour être perceptible par au moins un pilote d'au moins un élément mobile, le procédé comprenant un cycle incluant les étapes de :
- détermination d'une information de projection par un serveur,
- transfert de l'information de projection à un système de projection,
- projection de l'image par le système de projection sur base de l'information de projection,
- détermination d'une information de caractéristiques par le serveur pour chaque élément mobile,
- transfert de l'information de caractéristiques à l'élément mobile correspondant,
- adaptation de caractéristiques de l'élément mobile sur base de l'information de caractéristiques,
- réception des instructions d'un pilote de l'élément mobile, qui font que l'élément mobile génère une information pour le serveur,
- transfert de l'information pour le serveur de l'élément mobile au serveur,
- modification de la position de l'élément mobile sur base des instructions,
- détermination de la position de l'élément mobile par le système de localisation, qui génère une information de position,
- transfert de l'information de position du système de localisation au serveur, et
- traitement de données par le serveur, incluant la détermination d'une information de projection et la détermination d'une information de caractéristiques, sur base de l'information pour le serveur et de l'information de position.

Le procédé de création d'un environnement selon l'invention permet que l'ensemble de l'environnement s'adapte quasi instantanément à la position des éléments mobiles et aux instructions des pilotes.

Avantageusement, l'adaptation de caractéristiques de l'élément mobile comprend les étapes de :
- détermination d'information pour une interface électronique réalisée par un ordinateur de bord connecté au serveur,
- détermination de signaux pour les moyens d'action réalisée par une interface électronique connectée à l'ordinateur de bord, et
- modification de caractéristiques de moyen d'action réalisée par au moins un moyen d'action connecté à l'interface électronique.

L'interface électronique permet de faire le lien entre l'ordinateur de bord et les moyens d'action, notamment si l'ordinateur de bord n'est capable que de générer des signaux digitaux alors que les moyens d'action ne peuvent être actionnés que via des signaux analogiques.

Avantageusement, l'adaptation de caractéristiques de l'élément mobile comprend les étapes de :
- détermination d'information pour le tableau de bord réalisée par un ordinateur de bord connecté au serveur, et
- modification d'affichage réalisée par un tableau de bord connecté à l'ordinateur de bord.

Le tableau de bord permet d'afficher des informations, notamment en provenance du serveur, susceptibles d'intéresser le pilote.

Avantageusement, la projection de l'image par le système de projection comprend les étapes de :
- détermination de flux vidéo réalisée par au moins un ordinateur de flux vidéo connecté au serveur, et
- projection d'image réalisée par au moins un projecteur connecté à l'au moins un ordinateur de flux vidéo.

Le fait que le flux vidéo soit déterminé par les ordinateurs de flux vidéo permet de répartir le calcul de celui-ci entre différents dispositifs de calcul.

Avantageusement, la détermination de la position de l'élément mobile par le système de localisation comprend les étapes de :
- détection d'au moins un signal provenant de l'élément mobile par une caméra présente sur un capteur faisant partie du système de localisation,
- génération par la caméra d'une image comprenant au moins un point correspondant au signal détecté,
- transfert de l'image de la caméra à un dispositif de traitement de données du capteur,
- détermination des coordonnées et de la taille de chaque point sur une matrice relative au capteur par le dispositif de traitement de données,
- transfert des coordonnées et de la taille de chaque point sur la matrice relative au capteur du dispositif de traitement de données à un m icrocontrôleur faisant partie du système de localisation,
- transfert des coordonnées et de la taille de chaque point sur la matrice relative au capteur du microcontrôleur au serveur.

Avantageusement, le transfert des coordonnées et de la taille de chaque point sur la matrice relative au capteur du dispositif de traitement de données au microcontrôleur est réalisé en utilisant I2C.

Avantageusement, le transfert des coordonnées et de la taille de chaque point sur la matrice relative au capteur du microcontrôleur au serveur est réalisé en utilisant Ethernet.

Avantageusement, le transfert des coordonnées et de la taille de chaque point sur la matrice relative au capteur du dispositif de traitement de données au microcontrôleur est réalisé pour un nombre maximum de points à la fois, si l'image contient plus de points que ce nombre maximum, le transfert des coordonnées et de la taille de chaque point sur la matrice relative au capteur du dispositif de traitement de données au microcontrôleur est réalisé en plusieurs fois.

Il en outre possible d'utiliser un procédé d'installation d'un système de création d'environnement comprenant au moins une image, le système comprenant un système de projection et un système de localisation, la méthode comprenant les étapes de :
- placement du matériel du système de projection,
- calibration du système de projection,
- placement du matériel du système de localisation, et
- calibration du système de localisation.

Cela permet que le placement du matériel du système de localisation et/ou la calibration du système de localisation soient réalisées en fonction du système de projection.

Avantageusement, la calibration du système de projection comprend, pour au moins un projecteur faisant partie du système de projection:
- une détermination d'une partie de l'image qui est comprise dans une image partielle projetée par le projecteur,
- une projection par le projecteur de l'image partielle, et
- un ajustement de l'image partielle pour que l'image partielle corresponde à la partie de l'image déterminée lors de la détermination.

Avantageusement, la calibration du système de localisation comprend, pour au moins un capteur faisant partie du système de localisation, les étapes de :
- détermination de la surface à couvrir par chaque capteur, et
- ajustement de position de chaque capteur, l'ajustement de position de chaque capteur comprenant une projection, par le système de projection, d'une image d'ajustement indiquant dans quelle position ajuster le capteur.

Avantageusement, le procédé d'installation comprend en outre un étalonnage qui comprend, pour chacun des coins des surfaces à couvrir, les étapes de :
- projection, par le système de projection, d'un repère à une localisation spécifique de la surface à couvrir de chaque capteur, la localisation spécifique étant indiquée dans un système de coordonnées globales de l'environnement,
- placement d'un émetteur portable à proximité du repère projeté, et
- mesure d'étalonnage durant laquelle le capteur détermine les coordonnées de la position de l'émetteur portable dans une matrice de capteur.

Ce procédé rend particulièrement facile et rapide la calibration des capteurs, et permet aussi que le système de localisation et le système de projection soient alignés l'un avec l'autre.

Avantageusement, l'étalonnage comprend en outre une étape de correspondance entre les localisations spécifiques auxquelles les repères ont été projetés et les coordonnées de la position de l'émetteur portable dans la matrice de capteur, la correspondance résultant en un moyen permettant de passer des coordonnées dans la matrice du capteur aux coordonnées globales.

Cela permet de passer de coordonnées propres à chaque capteur car indiquées dans la matrice du capteur aux coordonnées globales.

Il aussi proposé d'utiliser, dans une réalisation, un procédé de guidage d'un pilote d'un élément mobile, le procédé de guidage comprenant les étapes de :
- détermination d'une trajectoire optimale pour l'élément mobile,
- localisation de l'élément mobile par un système de localisation,
- détermination d'au moins une action que le pilote doit réaliser pour que l'élément mobile se rapproche de la trajectoire optimale, et
- diffusion au pilote d'un message contenant des conseils pour que l'élément mobile suive la trajectoire optimale.

Cela permet de donner au pilote des conseils de pilote. Si plusieurs pilotes sont présents, chacun reçoit des conseils correspondant à sa situation propre.

Il en outre proposé d'utiliser, dans une réalisation, un procédé anticollision d'au moins un élément mobile comprenant les étapes de :
- localisation de chaque élément mobile par un système de localisation,
- détermination de la vitesse et de l'accélération de chaque élément mobile,
- calcul des probabilités de positions des éléments mobiles à un moment proche, et
- si la probabilité que plusieurs éléments mobiles soient en-deçà d'une distance seuil est plus grande qu'une probabilité déterminée, freinage automatique des éléments mobiles concernés.

Ce procédé permet d'éviter les collisions entre éléments mobiles.

Il en outre possible d'utiliser en outre un programme d'ordinateur pour la mise en oeuvre d'un procédé selon l'invention. Il en outre possible d'utiliser en outre un support de stockage non transitoire sur lequel est stocké un produit de programme informatique comprenant des parties de code de logiciel dans un format exécutable sur un dispositif informatique et configurées pour effectuer les étapes d'un procédé selon l'invention.

L'invention propose en outre un élément mobile comprenant :
- une interface électronique (240), agencée pour communiquer avec un serveur (400),
- au moins un actionneur connecté à l'interface électronique et agencé pour être actionné par un pilote de l'élément mobile 200,
- au moins un moyen d'action connecté à l'interface électronique et agencé pour réaliser une modification de caractéristiques de l'élément mobile sur base d'un signal reçu de l'interface électronique.

L'élément mobile peut être utilisé avec le serveur indépendamment de ou en relation avec un ou plusieurs des systèmes de projection et de localisation.

Préférentiellement, la connexion entre l'interface électronique et le serveur passe par un ordinateur de bord.

Avantageusement, l'élément mobile comprend en outre un émetteur.

Avantageusement, l'émetteur comprend au moins une source de rayonnement électromagnétique

Avantageusement, chacune des sources de rayonnement électromagnétique comprend un émetteur infra-rouge.

Avantageusement, la source de rayonnement électromagnétique comprend une diode électroluminescente d'une puissance comprise entre 5 et 50 watt.

L'invention propose en outre un système de projection agencé pour projeter au moins une image, le système comprenant au moins un ordinateur de flux vidéo agencé pour être en communication avec un serveur et au moins un projecteur connecté à l'ordinateur de flux vidéo.

La portée de l'invention est définie par les revendications introduites dans la suite. Toutefois, dans le cadre de la description, il est noté que le système de projection peut au final être utilisé avec le serveur indépendamment de l'élément mobile et du système de localisation décrit, qu'il peut être utilisé avec le serveur avec l'élément mobile mais sans système de localisation ou qu'il peut être utilisé avec le serveur sans l'élément mobile mais avec système de localisation.

Avantageusement, le système de projection comprend une pluralité de projecteurs, chacun des projecteurs étant agencé pour projeter une image partielle telle que l'ensemble des images partielles projetées par les projecteurs forme l'image. Avantageusement, les images partielles se recouvrent au moins partiellement.

L'invention propose en outre, un système de localisation comprenant au moins un microcontrôleur agencé pour être en communication avec un serveur et au moins un capteur connecté au microcontrôleur.

Le système de localisation selon l'invention peut être utilisé avec le serveur indépendamment de l'élément mobile et du système de projection, ou peut être utilisé avec le serveur avec l'élément mobile mais sans système de projection ou peut être utilisé avec le serveur sans l'élément mobile mais avec système de projection.

Avantageusement, une connexion entre chaque capteur et le microcontrôleur auquel le capteur est connecté utilise I2C. Avantageusement, une connexion entre chaque microcontrôleur et le serveur utilise Ethernet. Avantageusement, chaque capteur comprend une caméra agencée pour prendre une image et est capable de détecter le rayonnement infra-rouge.

Avantageusement, le capteur comprend en outre un dispositif de traitement de données agencé pour augmenter la résolution de l'image prise par la caméra. Avantageusement, le système de localisation comprend en outre un système d'identification du capteur grâce auquel le serveur est capable d'identifier le capteur duquel une information lui parvient parmi une pluralité de capteurs.

Avantageusement, chaque capteur est connecté à un système d'affichage comprenant une pluralité de diodes électroluminescentes, le capteur et le système d'affichage auquel il est connecté étant agencés pour l'allumage d'un nombre de diodes égal au nombre d'éléments mobiles perçus par le capteur.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre un diagramme d'un système de création d'environnement selon une réalisation de la présente invention ;
- la figure 2 illustre une réalisation d'environnement selon une réalisation de la présente ;
- la figure 3 illustre un diagramme du serveur, de l'image et des éléments d'un kart dans une réalisation de l'invention ;
- la figure 4 illustre un fonctionnement de l'éléments mobile selon une réalisation de la présente invention ;
- la figure 5 illustre un diagramme du système de projection selon une réalisation de la présente invention ;
- la figure 6 illustre un diagramme d'une installation du système de projection selon la présente invention ;
- la figure 7 illustre le fonctionnement du système de projection selon la présente invention ;
- la figure 8 illustre un diagramme du système de localisation selon une réalisation de la présente invention ;
- la figure 9 illustre un diagramme d'une installation du système de localisation selon la présente invention ;
- la figure 10 illustre une surface de captation du capteur et une matrice du capteur ;
- la figure 11 illustre un fonctionnement du système de localisation selon la présente invention ; et
- la figure 12 illustre un fonctionnement du système de création d'environnement selon une réalisation de la présente invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans de ce document, les termes « premier » et « deuxième » servent uniquement à différencier les différents éléments et n'impliquent pas d'ordre entre ces éléments.

Sur les figures, les éléments identiques ou analogues peuvent porter les mêmes références. Un élément présent plusieurs fois, c'est-à-dire ayant plusieurs représentants, peut porter une référence avec un même numéro mais une lettre différente. Dans ce cas, le numéro seul, sans la lettre, indique n'importe lequel des représentants de cet élément présent plusieurs fois. Les différents représentants d'un même élément peuvent avoir certaines caractéristiques différentes. Par exemple, l'élément 200 peut avoir trois représentants 200a, 200b et 200c.

Des éléments provenant de réalisations différentes de l'invention peuvent être combinés tout en restant dans le cadre de l'invention.

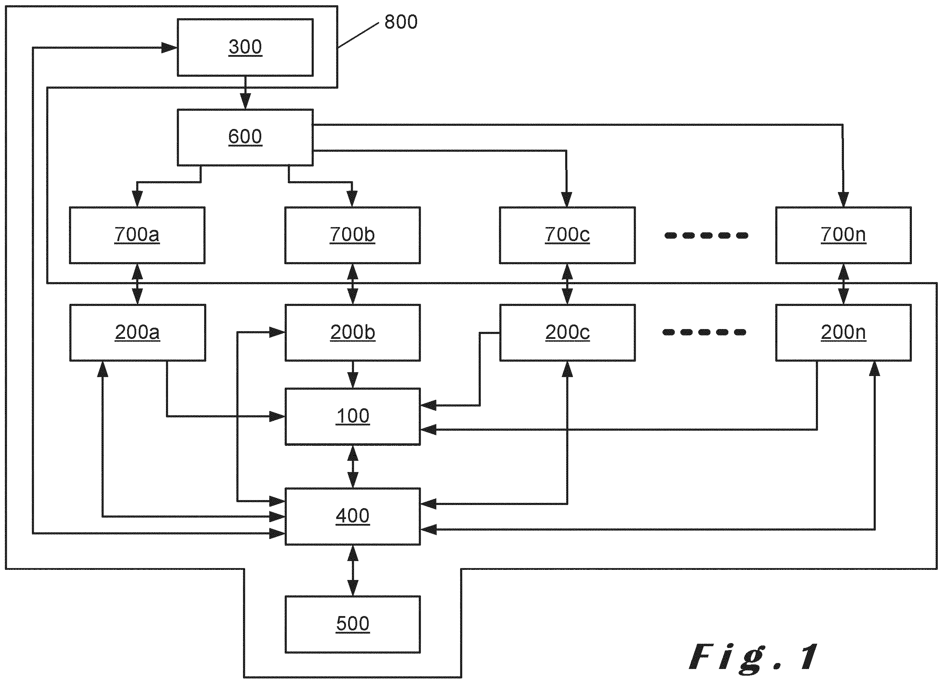

La figure 1 schématise un système de création d'environnement 800 selon une réalisation de la présente invention ainsi qu'une image 600 et au moins un pilote 700a, 700b, 700c,..., 700n capable de percevoir l'image 600, n étant un nombre entier égal ou plus grand que 1. Le système de création d'environnement 800 comprend un système de projection 300 agencé pour projeter l'image 600, au moins un élément mobile 200a, 200b, 200c, ..., 200n, chaque élément mobile 200*i* étant agencé pour interagir avec le pilote 700*i* correspondant, un système de localisation 100 agencé pour déterminer une position de chaque élément mobile 200a, 200b, 200c, ..., 200n, et un serveur 400 capable d'échanger des informations avec le système de projection 300, le système de localisation 100 et chaque élément mobile 200a, 200b, 200c, ..., 200n, i étant un nombre entier positif et plus petit ou égal à n. Le système de création d'environnement 800 comprend aussi un dispositif de gestion 500 capable d'échanger des informations avec le serveur 400.

Le système de projection 300, chaque élément mobile 200a, 200b, 200c, ..., 200n et le système de localisation 100 sont décrits en détails plus loin dans le présent document. L'image 600 sont préférentiellement projetées sur le sol, mais pourraient être projetées sur d'autres supports comme un mur ou une partie de chaque élément mobile 200a, 200b, 200c, ..., 200n.

Dans des réalisations de l'invention, le pilote 700 peut être sur l'élément mobile 200, par exemple si l'élément mobile 200 est un kart, le pilote 700 peut porter l'élément mobile 200, par exemple si l'élément mobile 200 est l'équipement du pilote 700 ou le pilote 700 peut agir à distance sur l'élément mobile 200, par exemple si l'élément mobile 200 est une voiture télécommandée.

Le serveur 400 assure la coordination entre le système de projection 300, l'élément mobile 200, le système de localisation 100 et le dispositif de gestion 500 et exécute aussi préférentiellement d'autres tâches. Le serveur 400 peut être réparti sur plusieurs dispositifs et éventuellement être dans un autre lieu que l'environnement créé par le système de création d'environnement 800.

Le dispositif de gestion 500 permet à un gestionnaire du système de création d'environnement de gérer certaines fonctions de celui-ci. Par exemple, le dispositif de gestion 500 permet de visualiser des alarmes émises par le serveur 400 et de les gérer, permet de signaler un kart comme défaillant pour ne plus qu'il soit repris dans une autre partie, ou de modifier des options de veille automatique. Le dispositif de gestion 500 permet aussi d'allumer le système de création d'environnement, de lancer une partie de karting, de retirer un joueur de la partie, de relancer la partie suite à un appui sur un arrêt d'urgence ou à une autre panne détectée automatiquement.

Le dispositif de gestion 500 permet aussi éventuellement de gérer les informations pour affichage sur des tv dans la salle où est installée le système de création d'environnement, d'envoyer des informations sur un site web, de contrôler la climatisation de la salle en fonction de l'horaire des parties à venir.

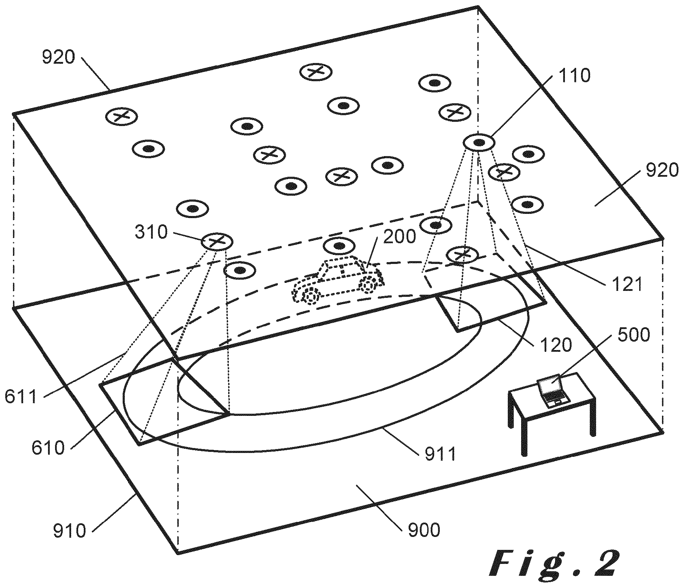

La figure 2 illustre une réalisation de l'invention dans laquelle l'élément mobile 200 est un kart conduit par le pilote 700, le système de projection 300 comprend des projecteurs 310, le système de localisation 100 comprend des capteurs 110 et le dispositif de gestion 500 est un ordinateur. Seulement un kart est représenté pour plus de clarté, mais il sera apprécié que plus d'un kart peut être présent dans l'environnement. De nombreux éléments du système de création d'environnement 800 selon l'invention ne sont pas explicitement représentés à la figure 2, même s'ils sont présents dans la réalisation de l'invention illustrée à la figure 2.

Le système de création d'environnement 800 est installé dans une salle 900 comprenant un sol 910 et une partie supérieure 920. La salle 900 est préférentiellement obscure de façon à ce que l'image 600 soient bien visibles. Le sol 910 est préférentiellement plat. La partie supérieure 920 comprend des moyens de fixation. Par exemple, la partie supérieure 920 peut comprendre un plafond ou une structure de poutrelles où des moyens de fixation peuvent être placés.

La figure 2 représente un cône de projection 611 émis par le projecteur 310 et une image 610 partielle sur le sol résultant de l'intersection du cône 611 de projection avec le sol 910. L'image 600 générée par le système de projection comprend l'ensemble des images 610 partielles projetées par l'ensemble des projecteurs 310. Dans l'exemple de la figure 2, l'image 600 inclut une piste 911 de karting. Dans le cadre du présent document, un cône peut avoir une base circulaire, rectangulaire ou de n'importe quelle forme.

La figure 2 représente un cône de captation 121 qui correspond à la zone perçue par le capteur 110. L'intersection du cône de captation 121 et du sol 910 est une surface de captation 120 du capteur 110. L'ensemble des surfaces de captation 120 des capteurs 110 faisant partie du système de localisation 100 couvre préférentiellement toute l'image 600 de façon à ce que tout élément mobile 200 se trouvant dans à proximité de l'image 600 soit visible par le système de localisation 100.

Dans une réalisation de l'invention, l'ensemble des surfaces de captation 120 des capteurs 110 faisant partie du système de localisation 100 ne couvre pas toute l'image 600.

Dans une réalisation de l'invention, l'image 600 ne couvre pas l'ensemble des surfaces de captation 120 des capteurs 110 faisant partie du système de localisation 100. Par exemple, l'ensemble des surfaces de captation 120 peut s'étendre à des stands situés à côté de la piste de karting alors que l'image 600 n'y est pas projetée.

L'image 600 comprend préférentiellement des éléments persistants comme la piste 911 et des éléments éphémères comme des images de bonus ou de malus. L'environnement comprend préférentiellement un ensemble d'élément et d'effets perceptibles par le pilote du kart, c'est-à-dire notamment l'image 600, le kart lui-même avec ses éléments et les autres karts avec leurs éléments s'il y en a, des effets se produisant sur le(s) kart(s) comme une vibration du volant, l'affichage d'une image sur le tableau de bord, un effet de roue libre, un ralentissement, et des effets supplémentaires comme un éclairage d'ambiance.

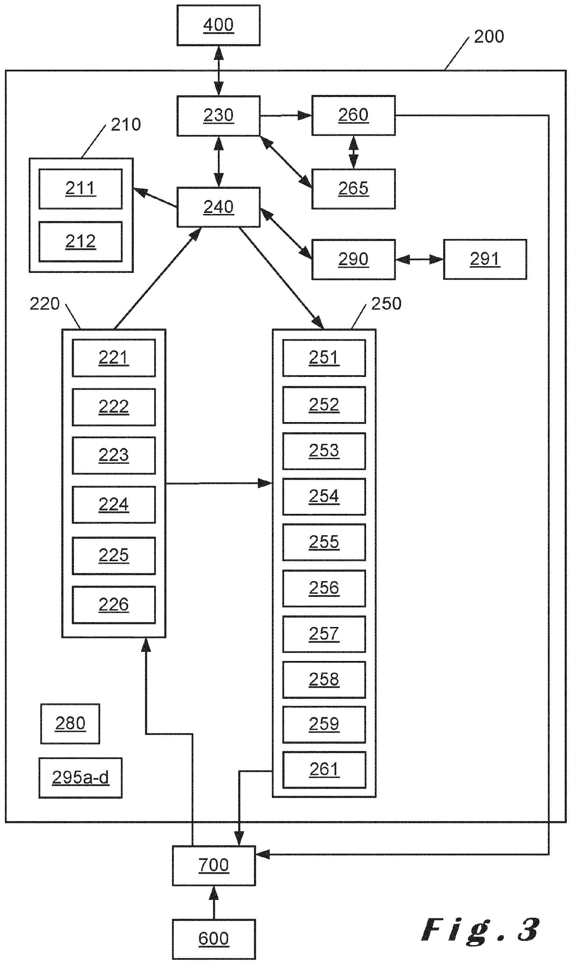

Une partie de karting se déroule préférentiellement de la manière suivante. Un administrateur indique sur le dispositif de gestion 500 une forme pour la piste 911 et un type de partie choisis. Sur base de la piste 911 et du type de partie choisis, et potentiellement d'autres informations, le serveur 400 détermine les informations à envoyer au système de projection 300 et à l'élément mobile 200 (aux éléments mobiles 200 s'il y en a plusieurs) en fonction des informations reçues du dispositif de gestion 500. Le système de projection 300 projette, via les projecteurs 310, l'image 600 correspondant à la piste 911 et au type de partie choisis. L'élément mobile 200 adapte ses caractéristiques à la piste 911 et au type de partie choisis. Par exemple, un variateur présent sur un moteur d'un kart est réglé pour que le kart ne dépasse jamais une certaine vitesse ou un tableau de bord est réglé pour afficher des photos de tous les pilotes participant à la partie. L'élément mobile 200 comprend aussi un émetteur 210 (visible à la figure 3) qui permet qu'il soit localisé par le système de localisation 100.

La figure 3 schématise le serveur 400, l'image 600 et les éléments d'un élément mobile 200 dans une réalisation de l'invention où l'élément mobile 200 est un kart.

L'élément mobile 200 communique avec le serveur 400 et avec le pilote 700 qui perçoit l'image 600. L'élément mobile 200 comprend préférentiellement les éléments suivants:
- un ordinateur de bord 230,
- une interface électronique 240,
- un tableau de bord 260,
- une caméra 265,
- un émetteur 210,
- une pluralité d'actionneurs du pilote 220,
- une pluralité de moyens d'action 250,
- un siège 280,
- une batterie 290 ou un autre moyen de puissance,
- un chargeur 291 de la batterie,
- quatre roues 295a, 295b, 295c, 295d.

La pluralité d'actionneurs du pilote 220 comprend préférentiellement:
- un accélérateur 221,
- un frein 222,
- un volant 223,
- au moins un bouton de tir 224,
- un bouton d'arrêt d'urgence 225,
- un capteur de présence dans le siège 226.

La pluralité de moyens d'action 250 comprend préférentiellement:
- un moteur droit 251,
- un moteur gauche 252,
- un vibreur de siège 253,
- un vibreur de volant 254,
- un éclairage de boutons du volant 255,
- un écran arrière 256,
- une pluralité de feux 257,
- un pistolet 258,
- au moins un haut-parleur 259, et
- un système de contrôle de direction.

L'émetteur 210 comprend préférentiellement au moins une source de rayonnement électromagnétique, qui peut être une lampe infra-rouge. L'émetteur 210 comprend plus préférentiellement au moins deux sources de rayonnement électromagnétique. Avoir deux sources permet qu'une des sources soit toujours active en cas de panne de l'autre. L'émetteur 210 comprend encore plus préférentiellement une première lampe infra-rouge 211 et une deuxième lampe infra-rouge 212. La source de rayonnement électromagnétique est préférentiellement d'intensité variable. Préférentiellement, l'ordinateur de bord 230 envoie à l'interface électronique 240 la puissance que doit émettre la LED infra-rouge 211, 212. Dans une réalisation de l'invention, la LED infra-rouge 211, 212 peut prendre deux états: les états éteint et allumé à pleine puissance.

L'élément mobile 200 comprend préférentiellement une antenne reliée à l'ordinateur de bord 230, notamment pour communiquer avec le serveur 400. L'antenne peut par exemple être une antenne wi-fi. Dans une réalisation de l'invention, l'antenne est intégrée dans une tablette qui sert d'ordinateur de bord 230 et de tableau de bord 260. Dans une réalisation de l'invention, le wi-fi est sécurisé par WPA2-PSK, mais une autre type de sécurité pourrait être utilisée.

L'élément mobile 200 peut comprendre d'autres boutons avec des utilités différentes selon le monde de jeu (utilisation bonus, changement de bonus, ..).

Le pilote démarre son kart. Il adapte la conduite du kart, en actionnant des actionneurs 220 comme l'accélérateur 221, le frein 222, le volant 223, à la forme de la piste 911, aux effets des moyens d'actions 250 et à la présence d'autres karts s'il y en a. Les instructions 202 données par le pilote 700 en actionnant les actionneurs 220 génèrent une information d'instruction qui est envoyée au serveur 400. Le système 100 de localisation détermine en permanence la position du kart, pour autant que le kart soit dans l'ensemble des surfaces 120 de captation des capteurs 110 (la figure 2) et envoie une information de position correspondant au serveur 400.

Le serveur 400 détermine, sur base de l'information d'instruction et sur base de l'information de position, la prochaine étape de la partie. Cette étape peut être la projection de l'image d'un objet en avant du kart, la possibilité pour le kart d'aller plus vite, un changement de forme de la piste, la possibilité pour le pilote 700 de tirer sur un autre pilote grâce à un pistolet 258 monté sur le kart, ... Ce tir peut être virtuel avec une ou plusieurs image(s) partielle(s) le rendant perceptible visuellement. Ce tir peut aussi utiliser un pointeur laser. Cette prochaine étape peut aussi être que rien ne change dans l'image 600 et dans les caractéristiques de l'élément mobile 200. Le dispositif de gestion 500 peut éventuellement intervenir dans cette détermination de la prochaine étape, par exemple en limitant la vitesse de tous les karts en agissant sur leur moteur 251, 252 si l'administrateur juge que les pilotes conduisent trop dangereusement.

Le serveur 400 est un dispositif situé à proximité du système de création d'environnement 800 ou à distance de celui-ci. La connexion entre le serveur 400 et le système de création d'environnement 800 peut se faire par internet. Le serveur 400 peut gérer plusieurs systèmes de création d'environnement 800 en parallèle. Le serveur 400 comprend préférentiellement une antenne, notamment pour communiquer directement avec l'élément mobile 200. Le serveur 400 peut être un ensemble d'éléments comme un ensemble d'ordinateurs.

L'ordinateur de bord 230 communique avec le serveur 400, avec l'interface électronique 240 et avec le tableau de bord 260. L'ordinateur de bord 230 reçoit et envoie des informations sous forme de signaux digitaux. L'ordinateur de bord 230 peut comprendre plusieurs ordinateurs et/ou l'élément mobile 200 peut comprendre plusieurs ordinateurs de bord.

L'interface électronique 240 permet d'envoyer des signaux analogiques, d'envoyer des signaux numériques, de recevoir des signaux analogiques et de recevoir des signaux numériques.

L'interface électronique 240 est préférentiellement une carte de circuit imprimé capable de transformer les signaux digitaux reçus de l'ordinateur de bord 230 en signaux analogiques destinés aux éléments autres que l'ordinateur de bord 230 auxquels elle est connectée, c'est-à-dire l'émetteur 210, la batterie 290, les actionneurs 220 et les moyens d'action 250.

Dans une réalisation de l'invention, l'ordinateur de bord 230 et l'interface électronique 240 permettent que l'élément mobile 200 soit en communication en temps réel avec le serveur 400. Dans une autre réalisation de l'invention, l'élément mobile 200 ne comprend pas d'ordinateur de bord 230 et l'interface électronique 240 communique directement avec le serveur 400.

Le serveur 400 peut ainsi influencer le comportement de l'élément mobile 200 via les moyens d'action 250. Le serveur 400 peut aussi ainsi recevoir des informations concernant les instructions données par le pilote 700 en actionnant les actionneurs 220.

Le tableau de bord 260 est un dispositif capable d'afficher des informations pour le pilote 700. Par exemple, le tableau de bord 260 peut être un écran ou un écran d'une tablette tactile. Le tableau de bord 260 reçoit préférentiellement des informations de l'ordinateur de bord 230 sous forme de signaux digitaux et en envoie potentiellement. Dans une réalisation de l'invention, le tableau de bord 260 et l'ordinateur de bord 230 sont un même appareil. Le tableau de bord 260 peut par exemple afficher des informations concernant l'état du frein, l'état de l'accélérateur, un bonus prêt à être utilisé, un état de points de vie du pilote, un flash aveuglant, de la publicité...

La caméra 265 est capable de prendre des photos et/ou de filmer. La caméra 265 peut être incluse dans la tablette tactile qui inclut aussi le tableau de bord 260. La caméra 265 envoie les images qu'elle capte vers le serveur 400, préférentiellement en passant via l'ordinateur de bord 230.

L'émetteur 210 émet un signal, préférentiellement une onde électromagnétique, permettant la localisation de l'élément mobile 200 par le système 100 de localisation, et en particulier par les capteurs 110. L'émetteur 210 émet un signal principalement vers le haut si les capteurs 110 sont situés en hauteur par rapport à l'élément mobile 200. Les LEDs 211, 212 sont préférentiellement des LEDs (light-emitting diodes en anglais signifie diodes électroluminescentes) infrarouges de puissance. Les LEDs 211, 212 ont préférentiellement une puissance entre 5 et 50 watt. Les LEDs 211, 212 on plus préférentiellement 15 watt de puissance. Les LEDs 211, 212 ont préférentiellement 900nm de longueur d'onde. Ces LEDS permettent d'avoir une bonne localisation des éléments mobiles 200 par le système de localisation 100 quels que soient l'angle d'émission du signal émis par l'émetteur 210 et l'angle d'incidence de ce signal sur les capteurs 110.

Le fait que l'émetteur 210 comprenne préférentiellement deux sources de signal, c'est-à-dire les deux LEDs infrarouge de puissance 211, 212, permet qu'en cas de panne d'une des deux sources de signal, l'autre permet toujours la localisation de l'élément mobile 200. Au lieu ou en plus des LEDs infrarouges de puissance 211, 212, l'émetteur 210 peut potentiellement comprendre une ou plusieurs des sources de signal suivantes, en un ou plusieurs exemplaires: une lampe à incandescence, une lampe à incandescence infrarouge , un assemblage de LEDs infrarouges qui, prises individuellement n'ont pas une puissance suffisante pour être perçues de façon fiable par les capteurs, mais dont l'ensemble a une puissance suffisante pour être perçu de façon fiable par les capteurs.

Les actionneurs 220 sont des organes qui permettent au pilote 700 de donner des instructions à l'élément mobile 200. Les actionneurs 220 sont préférentiellement indépendants les uns des autres et l'interface électronique 240 communique de façon indépendant avec chacun des actionneurs 220. Les actionneurs 220 reçoivent des informations du pilote 700, sous forme de mouvements (mouvement de pied pour le frein par exemple ou toucher d'une icône) et envoie des informations à l'interface électronique sous forme de signaux analogiques. Le contenu de ces informations est ensuite transmis à l'ordinateur de bord 230 sous forme de signaux digitaux, par exemple par un protocole Ethernet, puis au serveur 400 sous forme de signaux digitaux. Le bouton de tir 224 est préférentiellement situé sur le volant 223. Certaines des actionneurs 220 peuvent être situés sur la tablette tactile dont l'écran forme le tableau de bord 260.

Dans une réalisation alternative de l'invention, un ou plusieurs actionneurs 220 ont une action directe sur un ou plusieurs moyens d'action 250 et/ou éléments de l'élément mobile 200. Par exemple, le volant 223 peut agir sur un axe pour orienter l'élément mobile 200.

Les moyens d'action 250 sont des organes qui permettent à l'interface électronique 240 d'agir sur des éléments appartenant à l'élément mobile 200. Les moyens d'action 250 sont préférentiellement indépendants les uns des autres et moyens d'action 250 communiquent de façon indépendante avec l'interface électronique 240. Dans une réalisation de l'invention, il est possible que certains des actionneurs 220 agissent sur certains moyens d'action 250 sans passer par l'interface électronique 240.

Par exemple, pour créer une sensation de perte de contrôle du kart par le pilote 700, le serveur 400 peut demander que le moteur droit 251 fasse freiner la roue arrière droite 295a tandis que le moteur gauche 252 fait accélérer la roue arrière gauche 295b . Cette demande est relayée du serveur 400 à l'ordinateur de bord 230, puis à l'interface électronique 240 qui la transmet au moteur droit 251 et au moteur gauche 252.

Préférentiellement, pour créer une sensation de perte de contrôle du kart par le pilote 700, le serveur 400 informe l'ordinateur de bord 230 de l'élément mobile 200 (touché par un bonus, risque de collision et potentiellement des effets qui en découlent...) et l'ordinateur de bord 230 effectue le calcul de la vitesse envoyée à chacun des moteurs 251, 252. Cela permet que l'information de l'accélérateur n'ait pas besoin d'aller jusqu'au serveur 400 pour être exploitée pour le calcul de l'accélération à envoyer à chaque moteur 251, 252.

Le calcul de la vitesse envoyée à chacun des moteurs 251, 252 peut aussi être dans le serveur 400 ou dans l'interface électronique 240 qui comprend préférentiellement un ou plusieurs microcontrôleurs.

La sensation de perte de contrôle peut aussi être crée par des roues directionnelles tournant indépendamment de la volonté du pilote en débrayant ou non le volant.

Les moteurs 251, 252 agissent préférentiellement sur les roues arrières et peuvent faire accélérer, freiner ou vibrer la roue en accélérant et freinant de manière successive et rapprochée dans le temps

Le ou les haut-parleurs 259 peuvent être présents sur un corps de l'élément mobile 200, par exemple sur le kart, ou sur un casque, par exemple un casque pour sport automobile, porté par le pilote 700. Si le pilote 700a de l'élément mobile 200a utilise son pistolet 258 pour tirer sur un deuxième élément mobile 200b, un bruit de tir avec le bruit d'une balle qui s'éloigne peut être produit par son haut-parleur 259 alors que le pilote 700b du deuxième élément mobile 200b a son haut-parleur qui produit un bruit de balle qui se rapproche, l'intensité de ce bruit de balle qui se rapproche dépendant des positions relatives de l'élément mobile 200a d'où le tir part et du deuxième élément mobile 200b.

L'éclairage de boutons du volant 255 correspond préférentiellement à quatre boutons du volant 255.

L'écran arrière affiche préférentiellement le nom du pilote 700 conduisant l'élément mobile 200, sa position et sa couleur (selon son niveau ou selon son équipe selon le type de partie).

La batterie 290 est une batterie électrique, qui peut être chargée par le chargeur 291 de la batterie. Un réservoir à combustible à la place de la batterie 290 est aussi possible dans le cadre de la présente invention. La batterie 290 est préférentiellement en communication avec le serveur 400 via l'interface électronique 240 et l'ordinateur de bord 230 afin que le serveur 400 reçoive une information concernant l'état de charge de la batterie 290. Un transformateur DC/DC est par exemple connecté à la batterie 290 pour transformer le 48V généré par la batterie 290 en 12V de manière à alimenter en électricité l'ordinateur de bord 230 qui fonctionne en 12V et l'interface électronique 240 qui fonctionne également en 12V.

Dans une réalisation de l'invention, l'élément mobile 200 inclut quatre cartes électroniques. Trois des cartes électroniques sont alimentées en 12V avec un régulateur qui transforme le 12V en 5V car un microprocesseur présent sur la carte utilise du 5V. La quatrième carte électronique est alimentée directement en 5V.

Les éléments compris dans l'élément mobile 200 dans la réalisation de l'invention où l'élément mobile 200 est un kart ne sont pas nécessairement présents dans toutes les réalisations de l'invention, ou peuvent être présents sans être présents sur l'élément mobile 200.

Dans une réalisation de l'invention, l'élément mobile 200 peut être une voiture téléguidée, auquel cas le pilote 700 commande la voiture téléguidée de loin en regardant l'image 600 et actionnant les actionneurs 220 qui ne sont pas sur la voiture téléguidée.

Dans une réalisation de l'invention, l'élément mobile 200 l'équipement porté par le pilote 700. Par exemple, l'élément mobile 200 est un joueur de laser-game, qui est le pilote 700, et l'équipement de laser-game de cette personne, qui comporte un pistolet 258, un émetteur 210, un bouton de tir 224,... mais ne comporte pas de moteur 251, 252 ou de volant 223.

Dans une réalisation de l'invention, l'élément mobile 200 est un robot se déplaçant dans une usine et qui est actionné par le serveur 400 sans intervention d'un pilote percevant l'image 600. Dans ce cas, les actionneurs 220 ne sont pas présents sur le robot, mais il peut y avoir plus de moyens d'action 250 pour que le serveur 400, via l'ordinateur de bord 230 et l'interface 240 contrôle le robot. Le robot peut potentiellement comprendre une caméra 265 capable de percevoir l'image 600.

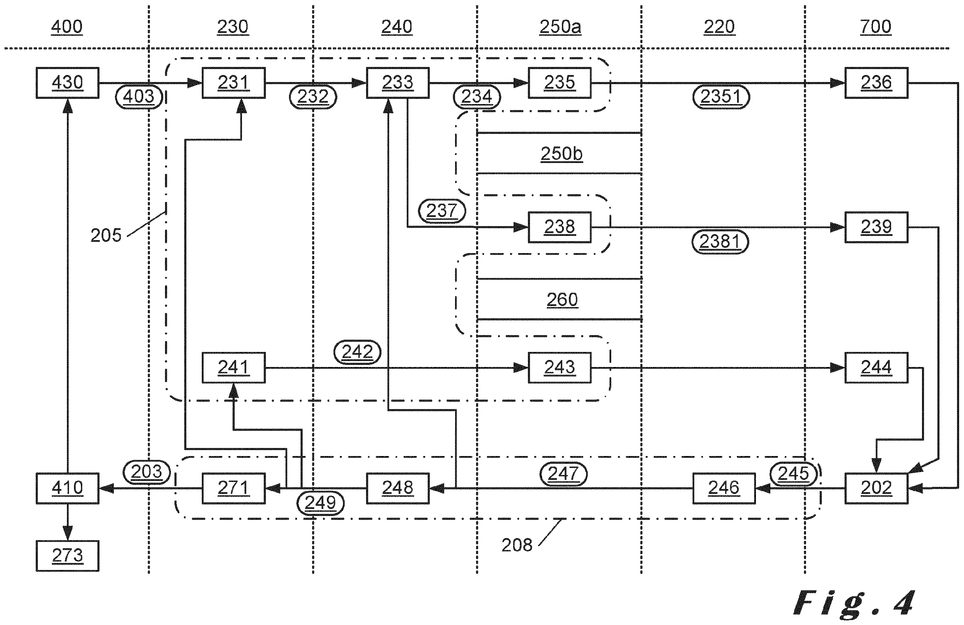

La figure 4 schématise un fonctionnement 299 de l'élément mobile 200, tenant compte d'interactions avec le serveur 400, selon une réalisation de la présente invention.

Le serveur 400 réalise une détermination 430 d'une information de caractéristiques qui résulte en une information 403 de caractéristiques qui est envoyée à l'ordinateur de bord 230. L'information 403 de caractéristiques peut être adaptée à chacun des éléments mobiles 200 présents dans le système de création d'environnement 800.

Sur base de l'information 403 de caractéristiques, l'ordinateur de bord 230 réalise une détermination 241 d'information pour le tableau de bord, qui résulte en une information 242 pour le tableau de bord qui est envoyée au tableau de bord 260. Sur base de l'information 242 pour le tableau de bord, le tableau de bord 260 réalise une modification 243 d'affichage qui est perçue par le pilote 700 lors d'une étape de perception 244 de modification de l'affichage.

Sur base de l'information 403 de caractéristiques, l'ordinateur de bord 230 réalise une détermination 231 d'information pour l'interface électronique, qui résulte en une information 232 pour l'interface électronique qui est envoyée à l'interface électronique 240. Sur base de l'information 232 pour l'interface électronique, l'interface électronique 240 réalise une détermination 233 de signaux pour les moyens d'action. Cette détermination 233 de signaux pour les moyens d'action comprend, pour un ou plusieurs moyens d'action 250, la détermination d'une valeur de signal préférentiellement analogique, qui sera envoyé au moyen d'action 250 en question.

La détermination 233 de signaux pour les moyens d'action résulte en un signal 234 pour un premier moyen d'action qui est envoyé à un premier moyen d'action 250a qui, sur base du signal 234 réalise une modification 235 de ses caractéristiques. Potentiellement, la détermination 233 de signaux pour les moyens d'action résulte en un signal 237 pour un deuxième moyen d'action, un signal pour un troisième moyen d'action etc. Ainsi, le deuxième moyen d'action 250b base du signal 237 réalise une modification 238 de ses caractéristiques, etc.

La modification 235 des caractéristiques du premier moyen d'action 250a résulte en un effet 2351 qui est perçu par le pilote 700, lors d'une étape de perception 236 de l'effet provenant du premier moyen d'action 250a. La modification 238 des caractéristiques du deuxième moyen d'action 250b résulte en un effet 2381 qui est perçu par le pilote 700, lors d'une étape de perception 239 de l'effet provenant du deuxième moyen d'action 250b. Pour reprendre l'exemple donné ci-dessus, le pilote 700 perçoit qu'il perd le contrôle de son kart car la roue arrière droite freine tandis que la roue arrière gauche accélère. Le fait que la roue arrière droite freine tandis que la roue arrière gauche accélère correspond à la modification 235 des caractéristiques des roues. Chacun des moyens d'action 250, notamment ceux indiqués à la figure 3, peut, de façon similaire, avoir une modification 235 d'une ou plusieurs de ses caractéristiques techniques.

Le pilote 700 réagit à la perception 277 de l'affichage du tableau de bord et aux perceptions 236, 237 des effets en donnant des instructions 202 via un mouvement 245 sur un ou plusieurs actionneurs 220. Par exemple, le pilote 700 redresse son kart en tournant le volant 223 en réaction à la perte de contrôle. Le mouvement 245 de chacun des actionneurs 220 actionné enclenche, par l'actionneur en question, une détermination 246 d'un signal d'actionneur qui résulte en un signal 247 d'actionneur qui est transmis à l'interface électronique 240. Sur base des signaux 247 d'actionneurs, l'interface électronique 240 réalise une détermination 248 d'une information pour l'ordinateur de bord, qui résulte en un signal 249 pour l'ordinateur de bord qui est transmis à l'ordinateur de bord 230. Sur base des signaux 247 d'actionneurs, l'interface électronique 240 peut aussi réaliser la détermination 233 de signaux pour les moyens d'action qui relance une première boucle: interface électronique 240 → moyens d'action 250 → pilote 700 → actionneurs 220 → interface électronique 240.

Sur base du signal 249 pour l'ordinateur de bord, l'ordinateur de bord 230 réalise une détermination 271 d'une information pour le serveur qui résulte en une information 203 pour le serveur qui est envoyée au serveur 400. Sur base du signal 249 pour l'ordinateur de bord, l'ordinateur de bord 230 réalise aussi la détermination 231 d'information pour l'interface électronique ce qui relance une deuxième boucle: ordinateur de bord 230 → interface électronique 240 → moyens d'action 250 → pilote 700 → actionneurs 220 → interface électronique 240 → ordinateur de bord 230.

Sur base du signal 249 pour l'ordinateur de bord, l'ordinateur de bord 230 réalise aussi la détermination 241 d'information pour le tableau de bord ce qui relance une troisième boucle: ordinateur de bord 230 → tableau de bord 260 → pilote 700 → actionneurs 220 → interface électronique 240 → ordinateur de bord 230.

Sur base de l'information 203 pour le serveur, le serveur 400 réalise la détermination 430 d'une information de caractéristiques, une détermination 420 d'une information de projection qui sera décrite plus loin ou d'autres étapes 273 qui peuvent mettre en jeu le dispositif de gestion ou d'autres éléments comme un éclairage d'ambiance .

La réalisation de la détermination 430 d'une information de caractéristiques relance une quatrième boucle, qui est potentiellement double: serveur 400 → ordinateur de bord 230 → interface électronique 240 → moyens d'action 250 → pilote 700 → actionneurs 220 → interface électronique 240 → ordinateur de bord 230 → serveur 400 et serveur 400 → ordinateur de bord 230 → tableau de bord 260 → pilote 700 → actionneurs 220 → interface électronique 240 → ordinateur de bord 230→ serveur 400.

Un ou plusieurs des première, deuxième, troisième et quatrième boucles se réalisent en permanence à haute fréquence, par exemple, jusqu'à 100 fois par seconde, durant tout le temps où l'élément mobile 200 fonctionne.

L'ensemble des étapes de détermination 231 d'information pour l'interface électronique, détermination 233 de signaux pour les moyens d'action, modifications 235, 238 des caractéristiques des moyens d'action, détermination 241 d'information pour le tableau de bord et modification 243 d'affichage est reprise par la suite sous l'étape d'adaptation 205 des caractéristiques de l'élément mobile. L'adaptation 205 des caractéristiques de l'élément mobile

Les étapes de détermination 246 d'un signal d'actionneur, détermination 248 d'une information pour l'ordinateur de bord et détermination 271 d'une information pour le serveur est reprise par la suite sous l'étape de transfert 208 des instructions. Le transfert 208 des instructions peut cependant comprendre d'autres étapes.

Dans une réalisation de l'invention, il est possible que certains des actionneurs 220 agissent directement sur certains moyens d'action 250. Par exemple, le frein mécanique d'un kart selon l'invention fonctionne préférentiellement comme sur un kart usuel et a la priorité sur l'accélérateur. Des variateurs (contrôleurs) des moteurs sont programmés de telle sorte que dès que l'accélération demandée par le pilote est nulle, les moteurs freinent. Un relai débranche l'accélérateur dès que le pilote touche à la pédale de frein de manière à éviter de freiner et d'accélérer en même temps, ce qui a pour effet que dès que l'on touche au frein, l'accélération envoyée aux variateurs est nulle et les moteurs freinent.

Cette solution permet d'avoir plusieurs sécurités pour le freinage du kart et d'éviter le kart ait un comportement indésirable en cas de mauvaise programmation des microcontrôleurs ou de l'ordinateur de bord.

Dans une autre réalisation de l'invention, les variateurs des moteurs sont reprogrammés en temps réel avec l'ordinateur de bord. Les freins mécaniques des karts usuels sont alors éventuellement retirés de l'élément mobile selon l'invention et dans ce cas l'information du freinage passe d'abord par l'interface électronique avant d'agir sur le kart.

Chaque variateur prend le courant continu des batteries et le transforme en courant adapté au moteur auquel il correspond. Les moteurs sont préférentiellement de type « brushless », ce qui fait que le courant est aussi fonction de l'état de rotation du moteur.

L'élément mobile 200 inclut préférentiellement un procédé d'arrêt d'urgence. Grâce au procédé d'arrêt d'urgence, un variateur présent sur le moteur droit 251 et un variateur présent sur le moteur gauche 252 sont configurés pour qu'en l'absence de signal 234 venant de l'interface électronique 240 pour le moteur en question, l'élément mobile 200 freine fortement. Cela permet que l'élément mobile 200 ralentisse fortement en cas de problème, notamment en cas de problème lié à l'interface électronique 240. Un tel procédé peut être aussi utilisé sur tout moyen d'actions 250.

L'élément mobile 200 inclut préférentiellement un procédé de roue libre. Grâce au procédé de roue libre, lorsque le pilote 700 relâche l'accélérateur 221, l'ordinateur de bord 230 envoie à l'interface électronique 240, dans l'information 232 pour l'interface électronique, un message digital indiquant que leurs moteurs 251, 252 doivent agir comme si les roues étaient en roue libre. Par exemple, lorsque l'élément mobile a une vitesse donnée et que l'accélération passe subitement d'une valeur A1 à une valeur inférieure A2, l'ordinateur de bord 230 envoie à chaque itération A = A1 - p*(A1-A2), avec un paramètre P valant entre 0,001 et 0,1. Ceci permet de faire réduire progressivement la vitesse de l'élément sans le faire freiner brutalement et d'avoir à terme l'accélération demandée. L'interface électronique 240 envoie alors, dans le signal 234 pour le moteur droit et dans le signal 234 pour le moteur gauche, un message analogique indiquant aux moteurs 251, 252 qu'ils doivent agir comme si les roues étaient en roue libre. Cela permet d'éviter que l'élément mobile 200 ne freine brutalement quand l'accélérateur 221 est relâché par le pilote 700.

Le système peut fonctionner sans que certaines actions ne soient transmises au serveur 400. L'ordinateur de bord reçoit des informations du serveur et c'est lui qui détermine de ce qui est envoyé à l'interface électronique sur base des actionneurs actionnés par le pilote et des informations reçues du serveur. L'état du bouton d'arrêt d'urgence est par exemple préférentiellement envoyé au serveur. Par contre, l'état de l'accélérateur n'est préférentiellement pas envoyé au serveur.

Dans une réalisation de l'invention, le variateur du moteur est reprogrammé en temps réel afin que le variateur n'ait pas le comportement qui fait freiner les moteurs lorsque l'accélération demandée est nulle

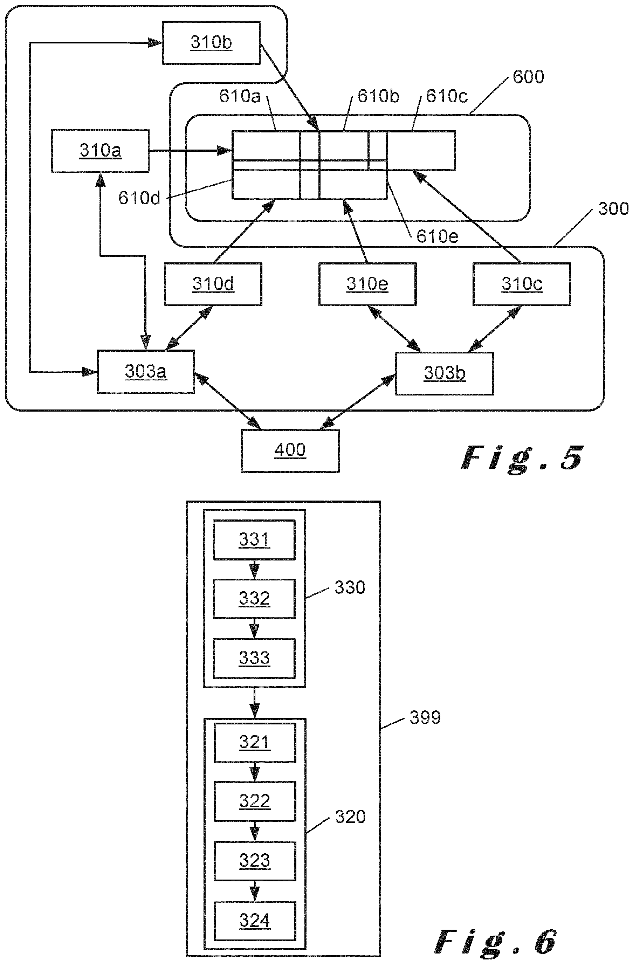

La figure 5 schématise le système 300 de projection selon une réalisation de la présente invention, et présente aussi une image 600 projetée par le système 300 de projection et le serveur 400.

Le système 300 de projection comprend une pluralité d'ordinateurs 303 de flux vidéos et une pluralité de projecteurs 310. Chaque ordinateur 303 de flux vidéo communique avec le serveur 400. Le serveur 400 peut faire office d'ordinateur 303 de flux vidéo. Chaque ordinateur 303 de flux vidéo gère au moins un projecteur 310 avec lequel il communique. Chaque projecteur 310 inclut préférentiellement un circuit électronique de type FPGA.

L'ordinateur 303 de flux vidéo réalise préférentiellement l'allumage, la mise en veille des projecteurs 310 qu'il gère, mais cela peut être fait aussi directement par le serveur 400, le dispositif de gestion 500 ou un autre dispositif L'ordinateur 303 de flux vidéo reçoit de la part du projecteur 310 qu'il gère des informations concernant sa température, ses alarmes s'il y en a et transmet ces informations vers le serveur 400 qui les enregistre afin d'anticiper de possibles pannes.

Comme déjà décrit à la figure 2, chaque projecteur 310 émet un cône 611 de projection et l'image résultant de l'intersection du cône 611 avec une surface, qui est préférentiellement un sol, est l'image 610 partielle. Le projecteur 310 est préférentiellement focalisé de façon à ce que l'image 610 partielle soit nette. L'image 600 générée par le système de projection comprend l'ensemble des images 610 partielles générées par l'ensemble des projecteurs 310.

Dans une réalisation de l'invention, les actions réalisées par l'ordinateur 303 de flux vidéo peuvent être réalisées par le serveur 400. Il n'y a alors pas d'ordinateur 303 de flux vidéo en tant que tel.

L'ordinateur 303 de flux vidéo peut être un appareil relativement simple et/ou ayant peu de puissance de calcul, comme un raspberry PI ou un smartphone avec une sortie vidéo. Dans une réalisation de l'invention, l'ordinateur 303 de flux vidéo dispose d'un dispositif d'envoi d'images sans fil ou tout autre dispositif permettant de générer une image et d'envoyer son signal vers un projecteur 310.

Dans une réalisation de l'invention, le projecteur 310 et l'ordinateur de flux vidéo 303 ne sont qu'un seul et même appareil, par exemple un smartphone disposant d'un vidéoprojecteur incorporé.

La figure 6 schématise une installation 399 du système 300 de projection selon la présente invention. L'installation 399 du système de projection comprend un placement 330 du matériel du système de projection et une calibration 320 du système de projection.

Le placement 330 du matériel du système de projection comprend un placement 331 des projecteurs, un placement des ordinateurs 303 et un placement 333 de câblage (ou une installation d'un système sans fil) entre les projecteurs 310, les ordinateurs 303 de flux vidéo et le serveur 400.

Les projecteurs 310 sont préférentiellement placés en hauteur et projettent leur image 610 partielle vers le sol. L'image 610 partielle projetée par le projecteur 310 est d'autant plus grande que le projecteur 310 et l'image 610 sont loin l'un de l'autre mais plus la distance entre eux grandit, plus la luminosité de l'image 610 partielle diminue et plus les pixels sont visibles sur l'image 610 partielle. Un pixel de l'image 610 partielle recouvre préférentiellement une surface inférieure à 1cm sur 1cm.

Dans une réalisation de l'invention, les projecteurs 310 sont des projecteurs grand angle placés à une hauteur d'environ 6m par rapport au sol et les images 610 partielles font 10 m × 7,5 m.

Les projecteurs 310 sont préférentiellement placés de façon à ce que les images 610 partielles des différents projecteurs 310 se recouvrent de façon à éviter un espace sans image entre des images 610 partielles. Il existe donc une zone de recouvrement à la frontière entre les images 610 partielles de plusieurs projecteurs 310. Afin d'éviter d'avoir une zone de luminosité double dans cette zone de recouvrement, un filtre de dégradé vers le noir est appliqué dans cette zone pour avoir une luminosité uniforme et masquer les frontières de projection. Par exemple, le recouvrement peut se faire sur une zone de 30 pixels.

Il n'est cependant pas nécessaire que les images 610 partielles se recouvrent.

Les projecteurs 310 sont préférentiellement placés fonction de contraintes dues à l'environnement dans lequel le système 300 de projection est mis en oeuvre. Ces contraintes peuvent être dues à une structure de poutres, à la forme d'un plafond, à la forme d'une armature préexistant ou mise en place pour le système 300 de projection.

Les projecteurs 310 sont préférentiellement placés les uns par rapport aux autres pour former une grille qui recouvre l'ensemble de la surface sur laquelle il est souhaité de projeter l'image 600. Les projecteurs 310 n'ont pas besoin d'être alignés. Cela représente un avantage du système 300 de projection selon l'invention car un alignement des projecteurs 310 est parfois compliqué à réaliser, notamment à cause des contraintes dues à l'environnement dans lequel le système 300 de projection est mis en oeuvre.

La surface sur laquelle il est souhaité de projeter l'image 600 est préférentiellement entre 100 et 100000 m². La surface sur laquelle il est souhaité de projeter l'image 600 est plus préférentiellement entre 1000 et 10000 m².

Il y a préférentiellement entre 10 et 10000 projecteurs 310. Il y a plus préférentiellement entre 20 et 1000 projecteurs 310. Il y a encore plus préférentiellement entre 1 et 200 projecteurs 310.

Les ordinateurs 303 de flux vidéo sont préférentiellement placés de manière à minimiser la longueur des câbles HDMI entre les ordinateurs 303 de flux vidéo et les projecteurs 310. Les ordinateurs 303 de flux vidéo peuvent être placés dans le local serveur et transmettre les images sur de longues distance via de la fibre optique, ou un ordinateur de projection peut être utilisé par projecteur et être placé juste à côté.

La calibration 320 du système de projection comprend, pour chaque projecteur 310, une détermination 321 d'une surface correspondant à l'image 610 partielle, un choix 322 de la résolution d'affichage, une projection 323 de l'image 610 partielle et un ajustement 324 de l'image 610 partielle pour que l'image 610 partielle corresponde effectivement à la surface déterminée. Cet ajustement 324 est préférentiellement réalisé par un ajustement d'un ou plusieurs angles de l'image 610 partielle réalisé par le FPGA du projecteur 310. Cet ajustement 324 est préférentiellement réalisé par une fonction de type « Quick Corner » disponible sur certains projecteurs de marque Epson. L'ajustement 324 pourrait être réalisé par les ordinateurs de flux vidéo 303.

La détermination 321 d'une surface correspondant à l'image 610 partielle détermine la partie de l'image 600 qui est comprise dans l'image 610 partielle et inclut l'enregistrement des coordonnées de l'image 610 partielle dans un système de coordonnées globales. Préférentiellement, si l'image 610 partielle est un quadrilatère les coordonnées des quatre coins de l'image 610 partielle sont enregistrées dans le serveur 400 et/ou l'ordinateur 303 de flux vidéo qui gère le projecteur 310.

L'ensemble de la calibration 320 est préférentiellement réalisée de façon automatique par un logiciel tournant sur le serveur 400 et/ou un ou plusieurs ordinateurs 303 de flux vidéo. Plus préférentiellement, l'ensemble de la calibration 320 pour le projecteur 310 est réalisée grâce à un logiciel exécuté sur le dispositif de gestion 500. Par exemple, un opérateur indique au serveur 400 via le dispositif de gestion 500 quel point il souhaite calibrer et le calibre et le serveur 400 enregistre la valeur et/ou l'envoie au projecteur.

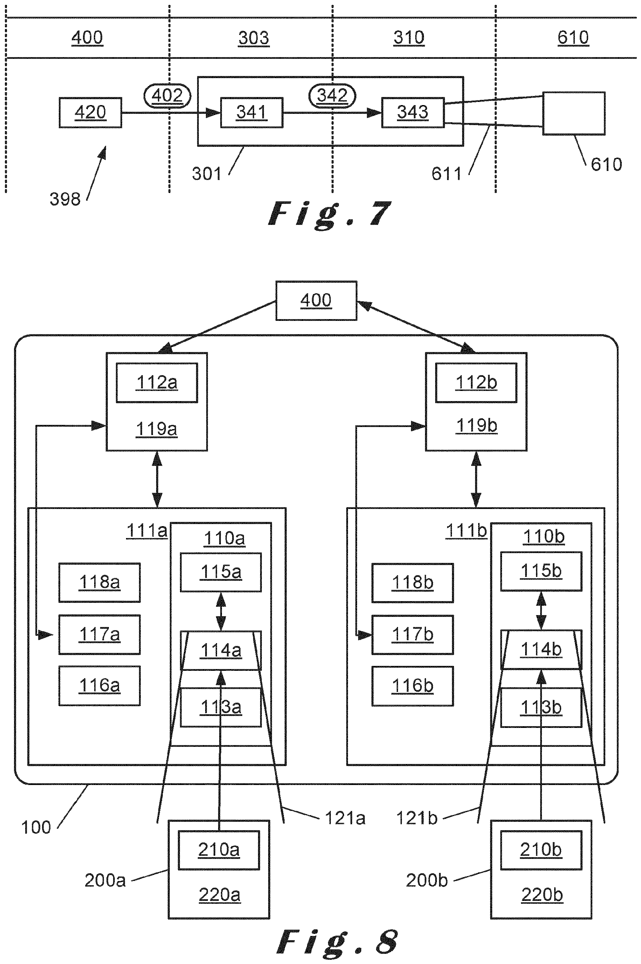

La figure 7 schématise un fonctionnement 398 du système 300 de projection selon la présente invention. Le serveur 400 réalise une détermination 420 d'une information de projection qui résulte en une information 402 de projection. L'information 402 de projection comprend des informations concernant l'image 600 (par exemple une piste de karting ou une arène de karting), les différents éléments mobiles 200 et leur position, leur direction, leur état (en apparition, leur vie (en %), en disparition, invisible). La même information 402 de projection est préférentiellement envoyée à tous les ordinateurs 303 de flux vidéo.

Lors d'une étape de détermination 341 de flux vidéo, chaque ordinateur 303 de flux vidéo détermine un flux vidéo pour chaque projecteur 310 qu'il gère, sur base de l'information 402 de projection et des coordonnées des images 610 partielles dudit projecteur 310. La détermination 341 de flux vidéo comprend préférentiellement une fluidification du contenu des images 610 partielles de façon à ce qu'un élément de l'image 600 ne bouge pas de façon hachée. La détermination 341 de flux vidéo comprend une gestion de changement d'état. Par exemple, lorsqu'un atteint sa cible, le missile explose et une animation d'explosion est affichée. La détermination 341 de flux vidéo assure une synchronisation entre les différents ordinateurs 303 de flux vidéo.

La détermination 341 de flux vidéo inclut préférentiellement l'utilisation d'un moteur graphique qui est réparti sur les différents ordinateurs 303 de flux vidéo, chaque ordinateur 303 de flux vidéo réalisant la détermination 341 de flux vidéo correspondant aux images 610 partielles des projecteurs 310 qu'il gère.

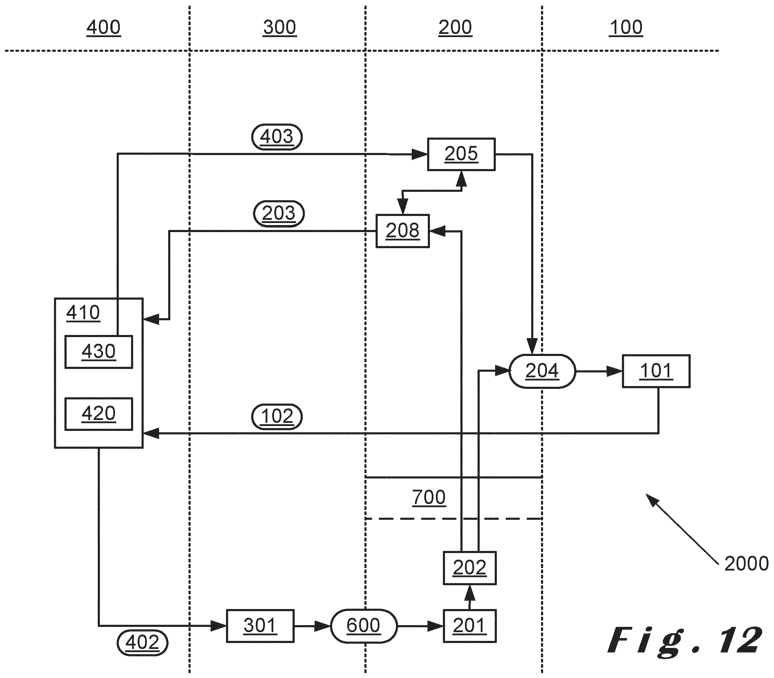

La détermination 341 de flux vidéo résulte en un flux vidéo 342 qui est différent pour chaque projecteur 310 et qui comprend le rendu visuel de l'image 610 partielle. Le flux vidéo 342 est envoyé au projecteur 310 correspondant qui, sur base de ce flux vidéo 342, projette 343 l'image 610 en l'ayant éventuellement ajustée pour la déformation. Une projection 301 réalisée par le système 300 de projection, telle que décrite plus loin avec le support de la figure 12, comprend les étapes de détermination 341 de flux vidéo et de projection 343 d'image.

La figure 8 schématise le système 100 de localisation selon une réalisation de la présente invention, et présente aussi une pluralité d'éléments mobiles 200, dont deux 200a, 200b sont illustrés, et le serveur 400.

Le système 100 de localisation comprend préférentiellement une pluralité de deuxièmes circuits 119, chacun des deuxièmes circuits 119 comprenant un microcontrôleur 112. Seulement deux deuxièmes circuits 119a, 119b sont illustrés. Chaque deuxième circuit 119 est en communication avec un premier circuit électronique 111 qui comprend préférentiellement un capteur 110, un système d'affichage 117 et un système 118 d'identification de capteur et optionnellement des moyens de calculs 116. Dans une réalisation de l'invention non-illustrée, un deuxième circuit 119 est en communication avec plusieurs premiers circuits électroniques 111 et/ou au moins un deuxième circuit 119 circuit électronique 111 comprend plus d'un capteur 110.

Dans une réalisation de l'invention, chaque premier circuit 111 est fusionné avec le deuxième circuit 119 lui correspondant.

Chaque capteur 110 a un cône 121 de captation et perçoit le ou les éléments mobiles 200 présents dans son cône 121 de captation. En particulier, les capteurs 110 perçoivent les signaux émis par les émetteurs 210 présents dans leur cône 121 de captation.

Le capteur 110 est capable de détecter le rayonnement infrarouge. Le capteur 110 comprend préférentiellement un filtre 113, une caméra 114 et un dispositif 115 de traitement de données. Le filtre 113 est préférentiellement un filtre laissant passer l'infrarouge. La caméra 114 est préférentiellement une caméra monochrome capable de détecter du rayonnement infrarouge, et comprend par exemple une matrice de 128x96 pixels. Le dispositif 115 de traitement de données est par exemple un FPGA.

La caméra 114 prend une image à une première résolution et envoie cette image au dispositif 115 de traitement de données. Le dispositif 115 de traitement de données réalise une analyse en sub-pixels pour augmenter la résolution de l'images prise par la caméra 114 et obtenir une deuxième résolution supérieure à la première. Cette deuxième résolution, par exemple de 1024x768 pixels, est à la dimension d'une matrice 122 de capteur qui est une information de sortie du capteur 110.

Chaque capteur 110 localise jusqu'à quatre éléments mobiles 200 sur la matrice 122 de capteur de 1024x768 pixels avec une fréquence de 500Hz.

Le système d'affichage 117 est préférentiellement composé d'une pluralité de diodes électroluminescentes. Le système d'affichage 117 est plus préférentiellement composé de quatre diodes électroluminescentes. Le système d'affichage 117 est en communication avec le capteur 110 de façon à ce que le nombre de diodes électroluminescentes allumées soit égal au nombre de points détectés par le capteur 110.

Le système 118 d'identification de capteur est préférentiellement capable de créer un identifiant du capteur 110a. Grâce à l'identifiant du capteur 110a, le serveur 400 identifie l'information 102 de position provenant du capteur 110a potentiellement via le microcontrôleur 112a, comme provenant de ce capteur 110a parmi la pluralité de capteurs 110 connectés au serveur 400. Cette identification par le serveur 400 est préférentiellement réalisée en incluant l'identifiant du capteur 110 dans l'adresse du capteur 110. Cela permet que le serveur 400 ne doive pas lire le contenu de l'information 102 de position pour identifier le capteur à son origine.

Le système 118 d'identification de capteur est préférentiellement composé d'une première pluralité d'éléments de contact dans laquelle les éléments de contact ont une référence commençant par X et d'une deuxième pluralité d'éléments de contact dans laquelle les éléments de contact ont une référence commençant par Y. Lors de l'installation du capteur 110, des contacts sont créés sur ses éléments de contact (par exemple en plaçant des cavaliers) de façon à ce que la position du capteur dans une première direction (coordonnée en X) soit indiquée par l'ensemble des éléments de contact de la première pluralité où un contact se produit, et la position du capteur dans une deuxième direction (coordonnée en Y) soit indiquée par l'ensemble des éléments de contact de la deuxième pluralité où un contact se produit. Ces coordonnées en X, Y sont ensuite reprises dans une adresse, par exemple adresse IP, du deuxième circuit 119 qui permet au serveur 400 d'identifier le deuxième circuit 119 et par conséquent le capteur 110 correspondant au deuxième circuit 119. Le serveur 400 identifie ainsi de quel capteur 110 provient une information grâce à l'adresse d'où provient l'information. Cela retire la contrainte de faire identifier les deuxièmes circuits 119 ou les capteurs 110 par le serveur 400 à l'aide d'un élément logiciel.

Dans une réalisation de l'invention, l'information concernant l'identification du capteur 110 se situe dans les octets 3 et 4 de l'adresse IP du capteur 110. C'est-à-dire que les deux derniers chiffres de l'IP (IPV4) précisent l'ID du capteur 110.

Une fonction du microcontrôleur 112 est d'interroger le capteur 110. Une autre fonction du microcontrôleur 112 est de transmettre des informations reçues du capteur au serveur 400. Une autre fonction du microcontrôleur 112 est d'allumer les diodes du système d'affichage 117.

La communication entre les premiers circuits électroniques 111 et les deuxièmes circuits 119 se fait préférentiellement par un bus de données de type I2C. La communication entre les deuxièmes circuits 119 et le serveur 400 se fait préférentiellement par le protocole Ethernet. L'utilisation d'Ethernet permet le transfert de données sur des grandes distances. L'utilisation d'Ethernet permet aussi l'utilisation de Power over Ethernet (PoE). Le PoE permet d'alimenter en électricité un appareil connecté au réseau via le câble Ethernet. Le PoE permet ainsi d'alimenter en électricité les capteurs 110 sans voir à installer des prises de courant et des transformateurs pour ceux-ci.

La communication de données par les deuxièmes circuits 119 nécessite de la part des microcontrôleurs 112 un traitement, ce qui peut limiter la fréquence du système 100 de localisation à 270Hz alors que la fréquence de captation des capteurs est de 500Hz.

Dans le cas où aucun élément mobile 200 n'est détecté par le capteur 110, le microcontrôleur 112 correspondant audit capteur 110 diminue la fréquence à laquelle il envoie des informations au serveur 400 afin d'éviter au serveur 400 de traiter des informations inutiles.

Les capteurs 110 sont préférentiellement placés en hauteur par rapport aux éléments mobiles 200, sur des moyens de fixation. Les capteurs 110 sont préférentiellement placés à une hauteur de 3 à 10m par rapport au sol. Par exemple, les capteurs 110 peuvent être placés à une hauteur d'environ 6m par rapport au sol.

Les capteurs 110 sont préférentiellement placés sur les moyens de fixation qui sont eux-mêmes placés en fonction de contraintes dues à l'environnement dans lequel le système 100 de localisation est mis en oeuvre. Ces contraintes peuvent être dues à une structure de poutres, à la forme d'un plafond, à la forme d'une armature préexistant ou mise en place pour le système 100 de localisation.

Les capteurs 110 sont préférentiellement placés de façon à ce que les cônes 121 de captation de l'ensemble des capteurs 110 du système 100 de localisation couvrent un volume, et ainsi une surface au sol, dans lequel il est souhaité de localiser des éléments mobiles 200. Les capteurs 110 n'ont pas besoin d'être alignés. Cela représente un avantage du système 100 de localisation selon l'invention car un alignement des capteurs 110 est parfois compliqué à réaliser, notamment à cause des contraintes dues à l'environnement dans lequel le système 100 de localisation est mis en oeuvre.

Le système 100 de localisation comprend préférentiellement de 1 à 10000 capteurs 110. Le système 100 de localisation comprend plus préférentiellement de 100 à 1000 capteurs 110.

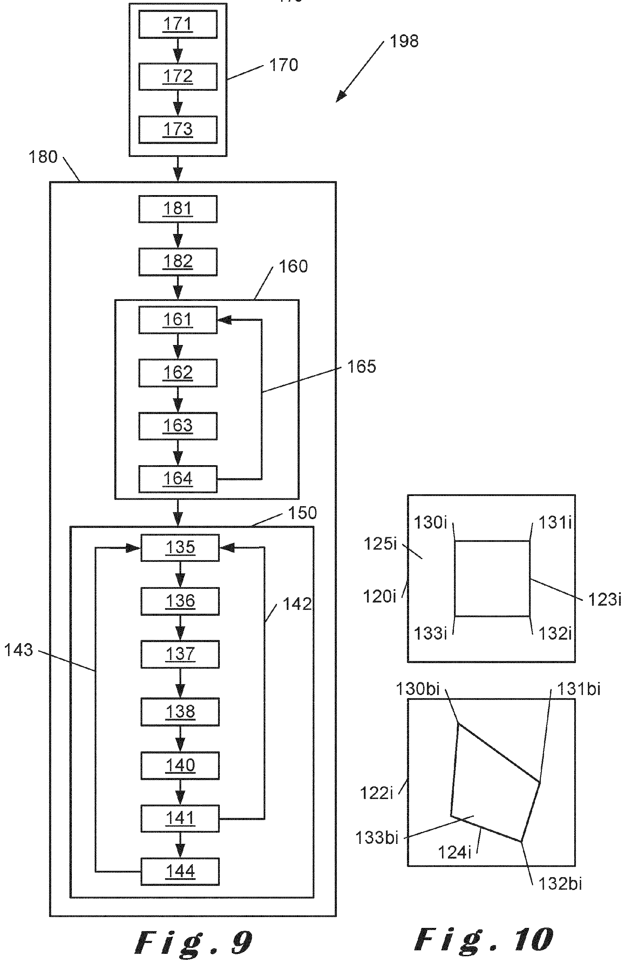

La figure 9 schématise une installation 198 du système 100 de localisation selon la présente invention. L'installation 198 du système de localisation comprend un placement 170 du matériel du système 100 de localisation et une calibration 180 du système 100 de localisation.

Le placement 170 de matériel du système 100 de localisation comprend préférentiellement un placement 171 des premiers circuits électroniques, un placement 172 des deuxièmes circuits électroniques connectés aux premiers circuits électroniques et un placement 173 des câbles Ethernet. Les câbles I2C et/ou les câbles Ethernet peuvent être remplacés par un autre moyen de communication, comme un moyen de communication sans fil.

Le placement 171 des premiers circuits électroniques, qui comprend le placement des capteurs 110, est fait de telle façon que les surfaces 120 de captation des capteurs se recouvrent partiellement, de façon à ce l'ensemble de la surface dans laquelle il est souhaité de réaliser des localisations soit couverte par l'ensemble des capteurs 110. Autrement dit, il n'existe pas de zone non-captée entre les différentes surfaces 120 des différents capteurs 110 sur l'ensemble de la surface que l'on souhaite être couverte.

Les capteurs 110 sont préférentiellement placés fonction de contraintes dues à l'environnement dans lequel le système 100 de localisation est mis en oeuvre. Ces contraintes peuvent être dues à une structure de poutres, à la forme d'un plafond, à la forme d'une armature préexistant ou mise en place pour le système 100 de localisation.

Les capteurs 110 sont préférentiellement placés les uns par rapport aux autres pour former une grille qui recouvre telle que les capteurs 110 détectent des objets sur l'ensemble de la surface sur laquelle il est souhaité de localiser des objets. Les capteurs 110 n'ont pas besoin d'être alignés. Cela représente un avantage du système 300 de localisation selon l'invention car un alignement des capteurs 110 est parfois compliqué à réaliser, notamment à cause des contraintes dues à l'environnement dans lequel le système 100 de localisation est mis en oeuvre.

La calibration 180 du système de localisation comprend une détermination 181 de position de capteurs durant laquelle le serveur 400 détermine, sur base d'une information préalable, comme celle fournie par exemple par le système 118 d'identification des capteurs, une localisation approximative pour chacun des capteurs 110.

Ensuite, durant une détermination 182 des surfaces à couvrir, le serveur 400 détermine, la surface 123*i* à couvrir pour chaque capteur 110*i* ou *i* est un entier égal ou supérieure à un (voir figure 10). Les surfaces 123*i* à couvrir sont préférentiellement déterminées de façon à ce que la surface 123*i* à couvrir d'un capteur donné 110*i* soit comprise dans la surface 120*i* de captation du capteur 110*i* et de façon à ce que les surfaces 123*i* à couvrir de capteurs 110*i* qui se suivent dans la grille de capteurs soient adjacentes. Il existe donc des zones couvertes par plus d'un capteur 110*i*. Les surfaces 123*i* à couvrir sont préférentiellement des quadrilatères, plus préférentiellement des rectangles d'environ 4m x 2,5m. Lors de cette détermination 182 des surfaces à couvrir, le serveur 400 détermine préférentiellement un point approximativement central pour chaque surface 123*i* à couvrir et quatre points de coins qui sont les coins 130*i*, 131*i*, 132*i*, 133*i* de la surface 123*i* à couvrir (voir figure 10).

La calibration 180 du système de localisation comprend ensuite un ajustement 160 de position des capteurs et un étalonnage 150.

L'ajustement 160 de position des capteurs comprend préférentiellement une boucle sur les capteurs 110. Considérons l'itération de cette boucle pour le *i*^{ème} capteur 110*i*. Par l'envoi 161 d'une information de point central, le serveur 400 indique au système 300 de projection que le système 300 de projection doit projeter une image d'ajustement indiquant dans quelle position ajuster le capteur 110*i*. Par exemple, le système 300 de projection projette un point, c'est-à-dire une image d'ajustement, au point correspondant au point central de la surface 123*i* à couvrir par le capteur 110*i*. Le système 300 de projection projette un point au point correspondant au point central de la surface 123*i* à couvrir par le capteur 110*i* lors d'une projection 162 de point central. Un émetteur infra-rouge portable est alors placé sur la projection du point central lors d'un placement 163 de point central. Le placement 163 peut se faire manuellement ou être réalisé par un robot suiveur, comprenant l'émetteur infra-rouge portable, qui suit des lignes de guidage projetées par le système 300 de projection. Un ajustement 164 d'orientation du capteur 110*i* est alors réalisé manuellement ou automatiquement. La boucle de l'ajustement 160 passe alors 165 à un capteur suivant, préférentiellement proche du capteur 110*i*.

L'étalonnage 150 comprend préférentiellement une boucle sur les capteurs 110. Considérons l'itération de cette boucle pour le *i*^{ème} capteur 110*i*. Une boucle interne considère alors chaque coin de la surface 123*i* à couvrir. Par l'envoi 135 d'une information de premier coin, le serveur 400 indique au système 300 de projection que le système 300 de projection doit projeter un repère au point correspondant au premier coin 130*i* de la surface 123*i* à couvrir par le capteur 110*i*. Le système 300 de projection projette un repère au point correspondant au premier coin 130*i* de la surface 123*i* à couvrir par le capteur 110*i* lors d'une projection 136 de premier coin, ou à une autre localisation spécifique de la surface 123*i* à couvrir. Un émetteur infra-rouge portable est alors placé sur la projection du premier coin lors d'un placement 137 de premier coin, ou à proximité de celle-ci. Le placement 137 peut se faire manuellement ou être réalisé par un robot suiveur, comprenant l'émetteur infra-rouge portable, qui peut suivre un itinéraire de guidage projeté par le système de projection 300 ou un itinéraire programmé dans sa mémoire et connu du serveur. Le placement 137 peut éventuellement se faire grâce à un robot suiveur qui suit un fil électrique placé dans le sol.

Lors d'une mesure 138 d'étalonnage, le capteur 110*i* mesure la position de l'émetteur infra-rouge portable telle qu'il la perçoit, c'est-à-dire que le capteur 110*i* détermine les coordonnées de la position de l'émetteur infra-rouge portable dans sa matrice 122. Lors d'un envoi 140 de coordonnées d'étalonnage, le capteur 110*i* envoie les coordonnées de la position de l'émetteur infra-rouge portable dans sa matrice 122, pour le premier coin 130*i* de sa surface 123*i* à couvrir au serveur 400, que le serveur 400 reçoit lors d'une étape 141 de réception de coordonnées d'étalonnage.

Après la réception 141 des coordonnées d'étalonnage, le serveur 400 indique à la boucle interne de passer alors au coin suivant 142, jusqu'à ce que les quatre coins 130*i*, 131*i*, 132*i*, 133*i* de la surface 123*i* à couvrir par le capteur 110*i* aient été considéré. A la fin de la boucle interne, le serveur 400 a reçu les coordonnées, dans la matrice 122*i* du capteur 110*i*, des quatre coins de la surface 123*i* à couvrir par le capteur 110*i*. Lors d'une étape de correspondance 144, le serveur 400 compare ces coordonnées dans la matrice 122*i* aux coordonnées globales qu'il avait demandé au système de projection 300 de projeter lors des quatre envois 135 d'information de coin et détermine ainsi des coefficients permettant de passer des coordonnées dans la matrice 122*i* du capteur 110*i* aux coordonnées globales. Ces coefficients sont différents pour chaque capteur 110*i*.

Quand les quatre coins 130*i*, 131*i*, 132*i*, 133*i* de la surface 123*i* à couvrir par le capteur 110*i* ont été considérés, le serveur 400 indique à la boucle de l'étalonnage 150 de passer 143 au capteur suivant, préférentiellement à un capteur proche de celui qui vient d'être considéré, jusqu'à ce que tous les capteurs 110*i* aient été étalonnés.

Dans une réalisation de l'invention, certaines des étapes de l'ajustement 160 de position des capteurs et de l'étalonnage 150 sont réalisées dans un ordre différent. Par exemple, chaque capteur est ajusté pour les quatre coins de sa surface 123*i* sont mesurés. Il est aussi possible de ne mesurer 137 qu'une fois les coins communs entre différentes surfaces 123*i* à couvrir afin d'améliorer la précision de la localisation lors d'un passage d'un élément mobile 200 d'une surface 123*i* à couvrir à une autre et de gagner du temps lors de l'étalonnage 150.

Les coordonnées globales du système 100 de localisation sont préférentiellement identiques aux coordonnées globales du système 300 de projection.

Le fait que ce soit le système de projection 300 qui indique les points de repère pour la calibration 180 du système 100 de localisation permet qu'un de ces deux systèmes ne puisse pas être décalé par rapport à l'autre. Un décalage des deux systèmes 100, 300 ne serait pas ressenti par les utilisateurs, en particulier par les pilotes des éléments mobiles 200.

Cependant, et même si l'ajustement 160 de position des capteurs et l'étalonnage 150 ont été décrits ci-dessus comme faisant appel au système de projection 300, un ajustement 160 de position des capteurs et un étalonnage 150 permettant aussi la détermination de la coordonnée globale d'un point à partir de ses coordonnées dans la matrice 122*i* d'un capteur sont possibles à l'aide d'une autre technique, par exemple une technique faisant appel à un GPS différentiel et/ou un télémètre laser.

La figure 10 illustre la surface 120*i* de captation du capteur et la matrice du capteur 122*i*. La surface 120*i* de captation du capteur 110*i*, comme illustré à la figure 2, est une surface dans l'espace réel alors que la matrice du capteur 122*i* est la grille de pixels dans le système de localisation 100.

La surface 120*i* de captation du capteur 110*i* comprend la surface 123*i* à couvrir par le capteur 110*i* et une surface de transition 125*i*. La surface 123*i* à couvrir par le capteur est préférentiellement un rectangle ayant quatre coins 130*i*, 131*i*, 132*i*, 133*i* comme décrit ci-dessus, mais pourrait avoir n'importe quelle forme, notamment une forme hexagonale. La surface 125*i* de transition est préférentiellement soit comprise dans la surface à couvrir 123*i* d'un autre capteur, soit en-dehors de la surface sur laquelle il est souhaité de réaliser des localisations.

A cause notamment du fait que la caméra du capteur 110*i* n'a pas toujours un axe optique parfaitement perpendiculaire à la surface 123*i* à couvrir, la surface 123*i* à couvrir, si elle est rectangulaire, correspond sur la matrice 122*i* de capteur à un quadrilatère 124*i* quelconque ayant quatre coins 130b*i*, 131b*i*, 132b*i*, 133b*i*. L'étalonnage 150 fait correspondre les points 130*i*-133*i* dans les coordonnées globales aux points 130b*i*-133b*i* dans les coordonnées de la matrice du capteur 122*i*.

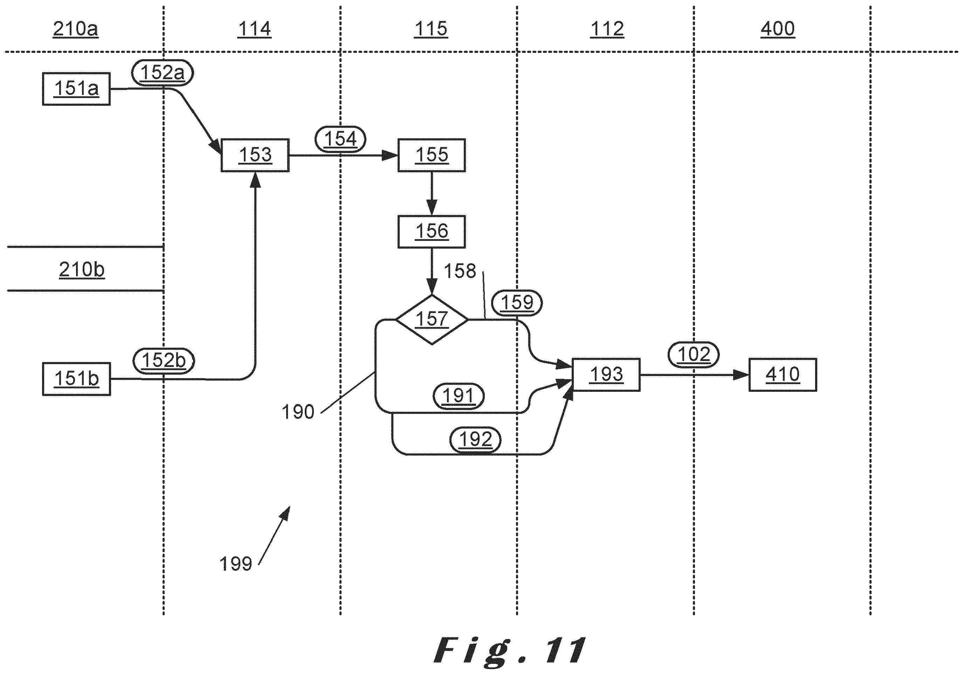

La figure 11 schématise un fonctionnement 199 du système de localisation 100 selon la présente invention en considérant que deux émetteurs 210a, 210b sont présents dans le cône 121 de captation du capteur 110*i* (pas illustré). Une émission 151a génère un signal infrarouge 152a pour l'émetteur 210a. Une émission 151b génère un signal infrarouge 152b pour l'émetteur 210b. Les deux signaux infrarouges 152a, 152b sont détectés par la caméra 114 lors d'une détection 153. La détection 153 correspond, pour chacun des signaux 152a, 153a, à un événement sur un ou plusieurs pixels, préférentiellement adjacents, d'une matrice de captation de la caméra 114. En réponse, la caméra 114 génère une image 154 ayant une première résolution, qui est égale à la résolution de la matrice de captation 122*i* (voir figure 10) et envoie cette image 154 de première résolution au dispositif 115 de traitement de données. L'image 154 de première résolution comprend préférentiellement un point pour l'ensemble des deux signaux infrarouges 152a, 152b car les deux signaux infrarouges 152a, 152b se confondent en un seul point.

Le dispositif 115 de traitement de données réalise une analyse 155 en sub-pixels pour augmenter la résolution de l'image et obtenir une image dans une deuxième résolution, qui est égale à la résolution de la matrice 122 du capteur (illustrée par la référence 122*i* à la figure 10). Le dispositif 115 réalise aussi une détermination 156 des coordonnées et des tailles des points correspondant aux deux signaux infrarouges 152a, 152b sur la matrice du capteur 122.

Le dispositif 115 de traitement de données vérifie, lors d'une vérification 157, si plus de quatre points sont présents dans l'image de deuxième résolution. Si non, 158, le dispositif 115 de traitement de données envoie les coordonnées et tailles 159 des points correspondant à tous les signaux infrarouges au microcontrôleur 112. Si oui, 190, les points correspondant aux signaux infra-rouges sont divisés en groupes de maximum quatre points. Lors d'un premier envoi, le dispositif 115 de traitement de données envoie au microcontrôleur 112 les coordonnées et des tailles 191 des points d'un premier groupe de points, et, lors d'un deuxième envoi, le dispositif 115 de traitement de données envoie au microcontrôleur 112 les coordonnées et des tailles 192 des points du deuxième groupe de points. S'il y a plus de huit points, lors d'un troisième envoi, le dispositif 115 de traitement de données envoie au microcontrôleur 112 les coordonnées et des tailles des points d'une troisième groupe de points, et ainsi de suite (non-montré).

Les envois sont préférentiellement cadencés avec une cadence identique à celle des étapes d'analyse 155 et de détermination 156 des coordonnées et des tailles des points. S'il y a quatre points ou moins, le rythme des envois pour chaque point est donc égal au rythme des étapes d'analyse 155 et de détermination 156 des coordonnées et des tailles des points. S'il y a cinq points ou plus, les coordonnées et la taille de chaque point est envoyé moins souvent au microcontrôleur 112.

Il n'y a donc pas de limites au nombre d'émetteurs 210 pouvant être localisés mais si ce nombre excède quatre, le rafraichissement des données de localisation, c'est-à-dire des coordonnées et des tailles des points, parvenant au microcontrôleur 112 est plus faible. Dans une réalisation de l'invention, la détection 153, l'analyse 155 et la détermination 156 se font 500 fois par seconde, ce qui permet que même si les données de localisation n'arrivent au microcontrôleur qu'un cycle sur deux, c'est-à-dire 250 fois par seconde, la localisation des émetteurs reste très précise.

Sur base des coordonnées et des tailles des points 159 ou 191, 192, le microcontrôleur 112 réalise une détermination 193 d'une information de position du capteur 110 avec lequel il communique et envoie une information 102 de position dudit capteur au serveur 400. Cet envoi demande un certain temps de traitement au microcontrôleur 112, ce qui fait que, si les coordonnées et des tailles des points 159 arrivaient au microcontrôleur 500 fois par seconde, le microcontrôleur 112 envoie l'information 102 de position au serveur environ 270 fois par seconde, ce qui correspond à une fréquence de cycle de 270Hz s'il y a quatre points ou moins. S'il y a cinq points ou plus, la fréquence est d'environ 135 Hz. La haute fréquence de cycle obtenue dans une réalisation de la présente invention permet d'obtenir un temps de latence très court pour la réaction du système 800 de création d'environnement aux modifications de localisation des éléments mobiles 200.

Sur base de l'information de position 102, et possiblement sur base d'autres informations ou de réglages prédéfinis, le serveur 400 réalise un traitement de données 410.

Les étapes du fonctionnement 199 qui sont réalisées par le système de localisation 100 sont comprises dans une détermination de position 101 montrée à la figure 12.

La figure 12 schématise un fonctionnement 2000 du système de création d'environnement 800 selon une réalisation de la présente invention.

Le serveur 400 réalise un traitement de données 410 qui résulte en une détermination 420 d'une information de projection d'image et une détermination 420 d'une information de paramètres. Le traitement de données 410 peut être réalisé sur base d'un échange d'information avec le dispositif de gestion 500 (non-illustré à la figure 12). Le traitement de données 410 comprend une détermination 420 d'une information de projection et une détermination 430 d'une information de caractéristiques comme décrit ci-dessus.

Sur base de la détermination 420 d'une information de projection d'image et d'une information de paramètres, le serveur 400 envoie une information 403 de paramètre à l'élément mobile 200. Sur base de l'information 403 de paramètre, l'élément mobile 200 réalise une adaptation de caractéristiques 205 de l'élément mobile. L'adaptation de caractéristiques 205 de l'élément mobile peut induire une modification de position 204 de l'élément mobile 200.

Sur base de la détermination 420 d'une information de projection d'image et d'une information de paramètres, le serveur 400 envoie une information 402 de projection d'image au système de projection 300. Sur base de l'information 402 de projection d'image, le système de projection 300 réalise une projection 301 d'image qui résulte en au moins une image 600. Le pilote 700 réalise une perception 201 de l'image durant laquelle il perçoit des informations contenues dans l'image 600. Sur base de la perception 201 de l'image 600, le pilote 700 de l'élément mobile 200 donne des instructions 202 à l'élément mobile 200. Les instructions 202 peuvent résulter en l'adaptation 205 de caractéristiques de l'élément mobile 200, en une information 203 pour le serveur qui est envoyée au serveur 400 et/ou influencer la position 204 de l'élément mobile 200. L'information 203 pour le serveur peut être transférée par une étape de transfert 208 préférentiellement telle que décrite à la figure 4.

La position 204 est déterminée par le système 100 de localisation lors d'une détermination de position 101. Le système de localisation 100 envoie alors une information 102 de position au serveur 400.

L'information 203 pour le serveur et l'information 102 de position sont ensuite utilisées par le serveur 400 lors d'un traitement de données 410 dans un cycle suivant. Le fonctionnement 2000 implique donc un cycle.

D'autres interactions et envois ou échanges d'informations entre le dispositif de gestion 500, le serveur 400, le système de projection 300, l'élément mobile 200 et le système de localisation 100 sont possibles non-détaillées sur la figure 12 dans le cadre de l'invention.

L'environnement créé par le système 800 de création d'environnement selon l'invention, comprend préférentiellement un ensemble d'effets perceptibles depuis l'élément mobile 200 ou depuis un autre endroit, c'est-à-dire l'image 600, l'adaptation 205 des caractéristiques de l'élément mobile, notamment par les moyens 250 d'action, et potentiellement des effets supplémentaires comme un éclairage d'ambiance.

Des procédés possiblement inclus dans le traitement de données 410 réalisé par le serveur 400 sont :
- une détermination de coordonnées globales pour les éléments mobiles 200,
- un suivi des éléments mobiles 200,
- une identification des éléments mobiles 200,
- un procédé anticollision,
- un procédé de guidage,
- un éclairage d'ambiance et
- un affichage d'images captées par le système 800 de création d'environnement.

Le serveur 400 peut aussi gérer des écrans tactiles affichant une miniature de la piste et avec lesquels des observateurs peuvent interagir. Ceux-ci peuvent alors ajouter des éléments sur la piste en temps réel par exemple.

Ces procédés peuvent se baser sur les informations 102 de position reçues de l'ensemble des capteurs 110 du système 100 de localisation selon la présente invention et/ou sur les informations 203 pour le serveur reçues de l'ensemble des éléments mobiles 200 faisant partie du système 800 de création d'environnement.

Lors de la détermination de coordonnées globales pour les points localisés par le système 100 de localisation, le serveur 400 utilise les informations 102 de position qui indiquent les coordonnées et la taille d'un point dans la matrice 122 du capteur qui a réalisé la détection 153 dudit point. Préférentiellement, les capteurs 110 ont préalablement été calibrés selon la méthode de calibration 180 décrite en se référant à la figure 9. Le système 100 de localisation peut potentiellement avoir été calibré d'une autre façon.

Lors de la détermination de coordonnées globales, le serveur 400 détermine, préférentiellement grâce aux coefficients permettant de passer des coordonnées dans la matrice 122 du capteur 110 aux coordonnées globales et déterminés lors de la calibration 180, les coordonnées globales de chacun des points détecté par le système 100 de localisation.

Les coordonnées globales sont utilisées par le procédé de suivi. Le suivi fait correspondre les coordonnées globales les plus récentes d'un point à un point identifié précédemment. Le critère préférentiellement utilisé pour cette correspondance est la proximité des coordonnées globales les plus récentes avec des coordonnées globales précédentes, si possible avec des coordonnées globales du cycle juste précédent. Par exemple, à chaque itération de la localisation l'emplacement sur lequel on s'attend à trouver l'élément mobile à l'itération suivante est calculé sur base de la position de l'élément mobile, sa direction, sa vitesse et son accélération. Lors de l'itération suivante de la localisation, une comparaison est faite entre les points reçus aux points calculés comme étant ceux où on s'attend à trouver un élément mobile pour associer un point perçu à un élément mobile. Ce critère fonctionne bien grâce à la haute fréquence du système de localisation 100 et à la précision du système de localisation 100, car dans l'intervalle entre deux cycles du système de localisation 100, les éléments mobiles 200 n'ont pas eu le temps de bouger beaucoup.

Si le suivi a pu mettre en correspondance les coordonnées globales les plus récentes d'un point avec un point identifié précédemment, ces coordonnées globales sont identifiées comme étant celles de l'élément mobile 200 qui correspond à ce point identifié précédemment.

Si aucun point dans les informations 102 de position reçues depuis un temps déterminé ne correspond à un élément mobile 200 qui est enregistré par le serveur 400 comme étant normalement localisable par le système de localisation 100, cet élément mobile 200 reçoit le statut de « perdu de vue ». Le serveur 400 envoie alors un message à l'élément mobile 200 lui indiquant d'éteindre son émetteur 210. Le serveur 400 envoie successivement à chaque élément mobile 200 perdu de vue un message demandant que ledit élément mobile 200 allume son émetteur 210.

Si le suivi n'a pas pu mettre en correspondance les coordonnées globales les plus récentes d'un point avec un point identifié précédemment et qu'au moins un des éléments mobiles 200 est perdu de vue, l'identification essaie de faire le lien entre l'apparition d'un point et l'allumage de l'émetteur demandé par le serveur. Si ce lien existe durant un certain temps, les coordonnées globales du point sont identifiées comme étant celles de l'élément mobile 200 qui avait allumé son émetteur.

Le procédé anticollision utilise les résultats de la détermination de coordonnées globales, du suivi et/ou de l'identification. Le procédé anticollision utilise potentiellement aussi des coordonnées d'autres éléments que les éléments mobiles, comme les limites de la surface couverte par le système de projection 300 ou les coordonnées d'autres objets. Sur base des résultats de la détermination de coordonnées globales, du suivi et/ou de l'identification, le serveur 400 calcule la vitesse (en intensité et direction) et l'accélération (en intensité et direction) des éléments mobiles 200 et/ou des points localisés. Grâce aux formules du Mouvement de Translation Rectiligne Uniformément Varié (MRVU), le serveur 400 calcule ensuite les probabilités de positions des éléments mobiles 200 à un moment futur. Par exemple, cela peut être fait en calculant la position qu'aurait le véhicule lorsqu'il serait arrêté si on le forçait à freiner à partir de l'itération courante. Cela permet d'anticiper les collisions entre éléments mobiles ou avec d'autres objets et de déterminer l'intensité d'une possible future collision en déterminant vitesses relatives au moment du choc, qui sont représentatives de la violence du choc. Si la probabilité que plusieurs éléments mobiles 200 soient en-deçà d'une distance seuil est plus grande qu'une probabilité déterminée le serveur 400 envoie, dans l'information 403 de caractéristique, un message aux éléments mobiles 200 concernés afin qu'ils freinent, ce qui fait que ce freinage est automatique car réalisé sans intervention humaine.

Le procédé de guidage utilise préférentiellement les résultats de l'identification, et peut éventuellement utiliser les résultats de la détermination de coordonnées globales et/ou du suivi. Le procédé de guidage utilise aussi préférentiellement des informations liées à l'image 600. Par exemple, dans le cas d'une course de karts, le procédé de guidage utilise les informations concernant les coordonnées globales des bords de la piste 911 de karting (figure 2).

Le procédé de guidage analyse la trajectoire des éléments mobiles 200 et la compare à une trajectoire considérée comme optimale sur la piste 911. Le procédé de guidage détermine alors les actions que le pilote 700 doit réaliser pour suivre cette trajectoire optimale. Le serveur 400 envoie, dans l'information 403 de caractéristique, un message aux éléments mobiles 200 afin qu'un message soit diffusé au pilote 700. Si le message contient des parties audio, elles sont diffusées au pilote 700 par le ou les haut-parleur(s) 259. Si le message contient des parties vidéos, elles sont diffusées au pilote 700 par le tableau de bord. Le message peut aussi contenir des vibrations du siège ou du volant ou un allumage d'un ou plusieurs boutons du volant. Le message audio peut être contenu dans l'information 403 de caractéristique ou être présent dans une mémoire comprise dans l'élément mobile 200. Le message audio peut être sélectionné automatiquement par le serveur 400 ou l'ordinateur de bord 230 dans une liste de messages audio, ou construit automatiquement par le serveur 400 ou l'ordinateur de bord 230. Le message audio peut éventuellement être diffusé dans un haut-parleur ne faisant pas partie de l'élément mobile 200.

Dans une autre réalisation de l'invention, le message audio est exprimé en temps réel par une personne autre que le pilote 700. Cela peut être quelqu'un présent sur le bord de la piste 911 qui donne des indications de guidage au pilote 700 dans un micro connecté au serveur 400.

Le procédé de guidage permet que le pilote 700 reçoive des conseils de pilotage en temps réel.

Le procédé de guidage permet aussi de guider un pilote malvoyant. Dans le cas où l'invention est utilisée par un ou plusieurs pilotes malvoyants, le système de projection d'images peut être désactivé, même si l'environnement existe en mémoire du serveur 400.

Le procédé d'éclairage d'ambiance est lié à l'utilisation d'un système d'éclairage d'ambiance qui consiste en des éclairages, par exemple des bandes LED RGB présente sur un bar proche de l'image 600, et un microcontrôleur connecté au serveur 400. Le serveur 400 calcule, en fonction d'informations d'éclairage souvent liées au contexte, la couleur des éclairages. Les informations d'éclairage peuvent être un démarrage d'une course, l'appel d'un joueur absent, l'utilisation d'un bonus spécial et le thème de la piste 911 (piste sur glace, sur terre, sur herbe, etc.).

L'affichage d'images captées par le système 800 de création d'environnement fait préférentiellement à la caméra 265 présente sur l'élément mobile 200. La caméra 265 envoie les images qu'elle capte à l'ordinateur de bord 230, qui les envoie au serveur 400 dans l'information d'instructions 203. Le serveur 400 génère alors des messages menant à l'affichage de ces images sur un écran géant placé près de l'image ou sur internet.

Dans le cas d'une utilisation du système 800 de création d'environnement pour du karting, utilisation déjà illustrée à la figure 2, l'image 600 comprend des éléments persistants, comme la piste 911, et des éléments éphémères comme des éléments bonus. Lorsqu'un kart 200 roule sur un élément bonus, ce qui est détecté par le système 800 de création d'environnement grâce à une correspondance entre la position de projection de l'élément bonus et la localisation du kart 200 réalisée par le système 100 de projection, le kart 200 gagne le bonus. Cela lui fournit un avantage : il gagne la possibilité de tirer avec le pistolet, d'aller plus vite, etc. Les différents bonus présents dans les jeux vidéo de karting, de voiture, de combat, peuvent ainsi être vécus par les pilotes dans un karting réel, ainsi que d'autres types de bonus.

Si le kart 200 sort de la piste 911, ce qui est perçu par le serveur 400 via le système 100 de localisation, le serveur 400 peut déterminer qu'un malus est appliqué au kart 200. Le serveur 400 envoie alors, dans l'information 403 de caractéristique, un message au kart 200 avec l'effet de ce malus. Cela peut être par exemple un arrêt du kart 200 ou une vitesse maximale limitée. Cela peut se traduire par un bridage d'accélération, un freinage d'une seule roue, un freinage d'une roue et une accélération de l'autre ou un vibration du kart 200.

Le serveur 400 considère qu'un premier kart 200a réussit un tir sur un deuxième kart 200b quand le serveur 400 calcule que l'instruction 202 correspondant au tir a été réalisée par le pilote du premier kart à un endroit (déterminé par le système de localisation 100) et un moment tel que le tir ayant une vitesse déterminée a atteint le deuxième kart, celui-ci étant aussi localisé par le système de localisation 100. Le tir est préférentiellement réalisé par le pilote en poussant sur le bouton de tir 224. Le tir est préférentiellement rendu visible par une image éphémère projetée par le système de projection 300 et rendu audible par le pilote du premier kart dans son haut-parleur par un son de tir qui s'éloigne et par le pilote du deuxième kart dans son haut-parleur par un son de tir qui s'approche. En cas de tir réussi, le serveur 400 indique au deuxième kart 200b (figure 1), dans l'information 403 de caractéristique (figure 12) destinée au deuxième kart 200b, que sa puissance maximale est diminuée, ce qui a pour effet de diminuer sa vitesse maximale, et indique aussi un message à afficher sur le tableau de bord. Le serveur 400 indique aussi au premier kart 200a, dans l'information 403 de caractéristique destinée au premier kart 200a, qu'il a réussi son tir.

Un autre effet rendu possible par le système 800 de création d'environnement selon l'invention est la possibilité pour un premier kart 200a de bénéficier d'un effet d'aspiration par un deuxième kart 200b. Si le premier kart se place à l'arrière du deuxième kart, ce qui est détecté par le serveur via la localisation des deux karts par le système de localisation 100, sa vitesse maximale est augmentée par le serveur 400, via une information 403 de caractéristique, pour simuler que sa résistance à l'air est diminuée, comme dans un effet d'aspiration de course automobile.

Un autre effet rendu possible par le système 800 de création d'environnement selon l'invention est la possibilité de compenser le manque de performance d'un véhicule (par exemple dû à une usure d'un élément mécanique ou du poids excessif d'un pilote) en analysant la vitesse du kart en comparaison avec l'accélération demandée et en appliquant un coefficient à l'accélérateur.

Un autre effet rendu possible par le système 800 de création d'environnement selon l'invention est la possibilité de créer un facteur de correction de manière à équilibrer la course en favorisant les joueurs qui ont du retard et en défavorisant les joueurs à l'avant de la course

Un autre effet rendu possible par le système 800 de création d'environnement selon l'invention est un jeu avec mode « peinture » dans lequel les pilotes « peignent » le sol avec leur kart, c'est-à-dire qu'une trainée d'une couleur spécifique à chaque kart est apparait dans l'image 600 derrière le kart et reste sur l'image 600. Le but du jeu est de peindre un maximum de surface avec la couleur attribuée à son kart. Dans le mode peinture, les ordinateurs de flux vidéo 303 sont informés, par le serveur 400, de la position 204 et de la couleur de chaque kart. Pour chaque kart se trouvant dans son cône de projection 611, sur base de sa position 204 et de sa couleur, l'ordinateur de flux vidéo 303 détermine les zones de peinture de cette couleur apparaissant dans son image partielle 610. L'ordinateur de flux vidéo 303 trace en continu une ligne très épaisse entre la position précédente d'un kart et sa nouvelle position. L'ordinateur de flux vidéo 303 détermine en temps réel le nombre de pixels couverts par les différentes peintures (sur leur surface de projection respective bien entendu). Ils retournent au serveur un tableau, en continu, qui détaile le nombre de pixels compté pour chaque peinture et qui lui permet le calcul des scores L'ordinateur de projection est alors en mesure d'identifier les différentes traces de peintures et de les totaliser (en pixels). Il retourne simplement au serveur le résultat de chaque itération qui en prendra note pour le traitement des scores.

Le serveur 400 peut insérer une image éphémère de sable sur une partie de la piste 911 en en donnant l'indication au système de projection 300 via l'information 402 de projection. Si un kart 200 roule sur l'image de sable, ce qui est déterminé par le système de localisation 100, il reçoit un malus.

Grâce au système de création d'environnement 800 selon l'invention, le karting peut être amusant en roulant seul et une course entre différents pilotes peut être influencée par les effets de projection de l'image 600 ou les effets des moyens d'action 250 du kart, comme le tir.

Un pilote peut avoir un niveau, comme dans les jeux vidéo, qui augmente au fur et à mesure qu'il joue. Un tir réussi sur un pilote de plus haut niveau peut rapporter un plus grand bonus qu'un tir réussi sur un pilote de plus bas niveau.

Dans une réalisation de l'invention, le serveur 400, qui connait la position des éléments mobiles 200 grâce au système de localisation 100, adapte l'image 600 projetée par le système de projection pour que rien ne soit projeté sur les éléments mobiles 200 ou qu'au contraire un halo d'une certaine couleur soit projeté sur les éléments mobiles 200.

Des utilisations possibles autres que le karting du système de création d'environnement 800 sont les suivantes :
- ski, notamment ski indoor : localisation d'un émetteur sur l'équipement des skieurs, projection d'images sur la piste de ski, avec un élément mobile formé par le skieur et l'équipement du skieur
- vélo, notamment vélo indoor : localisation d'un émetteur sur les vélos ou le casque des cyclistes, projection d'une image de piste de vélo ou d'images sur une piste de vélo, avec un élément mobile formé par le vélo, le cycliste et son équipement
- circuit de voitures téléguidées : localisation d'un émetteur sur les voitures, le pilote d'une voiture étant physiquement hors de la voiture même s'il est décrit ici comme faisant partie de l'élément mobile, projection d'une piste de voiture
- « laser-game » : localisation d'un émetteur sur l'équipement des joueurs, élément mobile comprenant le joueur et son équipement, dont son pistolet et ses capteurs de tir, projection d'éléments comme des bonus ou des cibles dans des pièces constituant un labyrinthe de jeu
- localisation d'objets ou de robots dans une usine : les robots ou objets à localiser ayant un émetteur, il n'y pas préférentiellement pas de système de projection et de pilote dans cette utilisation
- localisation d'objets sur les terrains de sport : par exemple localisation d'une balle de ping-pong réfléchissant l'infrarouge et éclairée avec du rayonnement infrarouge dans un environnement (table et sol notamment) qui ne réfléchit par l'infrarouge

Dans ces utilisations, comme dans d'autres utilisations, une partie du système de création d'environnement 800 peut être utilisée indépendamment du reste du système de création d'environnement 800. Par exemple :
- seul le système de localisation 100 est utilisé, potentiellement couplé avec le serveur 400,
- seul le système de projection 300 est utilisé, potentiellement couplé avec le serveur 400,
- seul l'élément mobile 200 est utilisé, potentiellement couplé avec le serveur 400,
- le système de localisation 100 et le système de projection 300 sont utilisés, potentiellement couplés avec le serveur 400,
- le système de localisation 100 et l'élément mobile 200 sont utilisés, potentiellement couplés avec le serveur 400, ou
- le système de projection 300 et l'élément mobile 200 sont utilisés, potentiellement couplés avec le serveur 400.

Dans chacun des cas, une ou plusieurs des méthodes décrites dans le cadre de l'invention, peuvent être mises en oeuvre.

Les éléments préférentiels suivants permettent une localisation fiable, précise au cm près, à une fréquence de plus de 200Hz, des dizaines d'éléments mobiles sur une surface de plus de 100 m²:
- un ensemble de capteurs 110 selon la présente invention,
- la connexion des capteurs 110 par I2C aux microcontrôleurs 112,
- la connexion des microcontrôleurs 112 par Ethernet au serveur 400, et
- la calibration 180 du système de localisation selon la présente invention.

Une telle précision et une telle fréquence de localisation permettent que les éléments mobiles se déplacent à une vitesse de 30km/h dans l'environnement créé par le système de création d'environnement en ayant cet environnement, qui comprend le kart, des images projetées potentiellement d'autres éléments, qui s'adapte à leur position précise. Cela permet aussi d'éviter les collisions entre éléments mobiles et permet que le pilote soit guidé par le procédé de guidage en fonction de sa localisation précise.

Le système de création d'environnement 800, en intégrant préférablement le système de projection 300, le système de localisation 100 et un ou plusieurs éléments mobiles 200, permet que le pilote et des spectateurs soient immergés dans un environnement mélangeant des éléments tangibles, comme les éléments mobiles, et des images et où éléments tangibles et images interagissent. La combinaison des éléments préférentiels suivants permet que le pilote et/ou les spectateurs soient immergés dans l'environnement créé par le système de création d'environnement 800 ;
- l'image 600, contenant des éléments persistants et des éléments éphémères, ces éléments éphémères dépendant de la localisation des éléments mobiles,
- les effets créés par les moyens d'action 250, et
- l'éclairage d'ambiance .

Le système de création d'environnement 800 selon l'invention est déplaçable, léger, rapide à mettre en place (potentiellement en une journée). Il est d'un grand confort, simple d'utilisation, assure un haut niveau de sécurité, et procure au pilote et aux spectateurs la sensation de vivre pleinement une expérience complète.

Le système de localisation 100 selon l'invention est aussi déplaçable, léger, rapide à mettre en place, d'un grand confort et simple d'utilisation.

Le système de projection 300 selon l'invention est aussi déplaçable, léger, rapide à mettre en place, d'un grand confort et simple d'utilisation.

Le système de création d'environnement 800 selon l'invention combine les avantages du karting réel, comme une accélération réelle, et du karting en jeu vidéo comme les bonus, les interactions avec environnement et fait que les joueurs aient un niveau d'expérience.

La présente invention est définie dans les revendications ci-après introduites.

## Revendications

1. Système de création d'un environnement (800) comprenant une image (600) agencée pour être perceptible par un ou plusieurs pilotes (700) d'un ou plusieurs éléments mobiles (200), le système comprenant :
• le ou les éléments mobiles (200), chacun comprenant une interface électronique (240) à laquelle est connecté un moyen d'action (250) ;
• un système de projection (300) agencé pour projeter l'image (600) ;
• un système de localisation (100) agencé pour déterminer une position de chaque élément mobile (200) présent à proximité de l'image (600) ; et
• un serveur (400) agencé pour être connecté à l'interface électronique (240) de chaque élément mobile (200) et au système de localisation (100), et pour contrôler le moyen d'action (250) sur base de la position de chaque élément mobile (200) reçue du système de localisation (100) ;
**caractérisé en ce que**
le serveur (400) est également agencé pour être connecté au système de projection (300) et pour contrôler ce dernier sur base de la position de chaque élément mobile (200) reçue du système de localisation (100).

2. Système selon la revendication 1, dans lequel le système de projection (300) comprend une pluralité de projecteurs (310) dont chacun est agencé pour projeter une image partielle (610a - 610e), de sorte que les images partielles (610a - 610e) projetées par les projecteurs (310) se recouvrent au moins partiellement et forment l'image (600).

3. Système selon la revendication 1 ou 2, dans lequel le système de localisation (100) comprenant un ou plusieurs capteurs (110) dont chacun est connecté à un parmi un ou plusieurs microcontrôleurs (112) connectés au serveur (400).

4. Système selon la revendication 3, dans lequel chaque microcontrôleur est connecté au serveur (400) via Ethernet.

5. Système selon la revendication 3, dans lequel chaque microcontrôleur est connecté au serveur (400) via un moyen de communication sans fil.

6. Système selon l'une quelconque des revendications 3 à 5, dans lequel les capteurs sont agencés pour recevoir des signaux émis par un ou plusieurs émetteurs (210) permettant que l'élément mobile (200) soit localisé par le système de localisation (100).

7. Système selon la revendication 6 dans lequel chaque élément mobile (200) comprend un tel émetteur (210).

8. Système selon la revendication 6 ou 7, dans laquelle chaque émetteur (210) comprend au moins une source (211) de rayonnement infra-rouge.

9. Système selon l'une quelconque des revendications 3 à 8, dans lequel chaque capteur (110) comprend une caméra (114) agencée pour prendre une image et capable de détecter un rayonnement infra-rouge.

10. Système selon la revendication 9, dans lequel chaque capteur (110) comprend un dispositif de traitement de données (115) agencé pour augmenter la résolution de l'image prise par la caméra (114).

11. Système selon la revendication 10, dans lequel chaque capteur (110) comprend un filtre (113) laissant passer l'infrarouge.

12. Système selon l'une quelconque des revendications 1 à 11, dans lequel chaque élément mobile (200) comprend un ordinateur de bord (230) relié à une antenne pour communiquer avec le serveur (400), la connexion entre l'interface électronique (240) et le serveur (400) passant par l'ordinateur de bord (230).

13. Système selon l'une quelconque des revendications 1 à 12, dans lequel chaque élément mobile (200) comprend un actionneur (220) connecté à l'interface électronique (240) et agencé pour être actionné par le pilote (700) de l'élément mobile (200), le serveur (400) étant agencé pour agir sur le système de projection (300) et sur le moyen d'action (250) sur base d'un actionnement d'au moins un actionneur (220).

14. Système selon l'une quelconque des revendications 1 à 13, dans lequel chaque élément mobile (200) comprend un haut-parleur (259) sur un corps de l'élément mobile (200) ou sur un casque destiné à être porté par le pilote de l'élément mobile (200).

15. Système selon l'une quelconque des revendications 1 à 14, dans lequel l'image (600) est projetée sur un sol (910) et comprend une piste (911) de karting, et dans lequel chaque élément mobile (200) est un kart.

16. Procédé de création d'un environnement comprenant une image (600) agencée pour être perceptible par un ou plusieurs pilotes (700) d'un ou plusieurs éléments mobiles (200), le procédé comprenant un cycle incluant les étapes suivantes :
• détermination (420) d'une information (402) de projection par un serveur (400),
• transfert de l'information (402) de projection à un système de projection (300),
• projection (301) de l'image (600) par le système de projection (300) sur base de l'information (402) de projection,
• détermination (430) d'une information (403) de caractéristiques par le serveur (400) pour chaque élément mobile (200),
• transfert de l'information (403) de caractéristiques à l'élément mobile (200) correspondant,
• adaptation (205) de caractéristiques de l'élément mobile (200) sur base de l'information (403) de caractéristiques,
• réception des instructions (202) d'un pilote de l'élément mobile (200), qui font que l'élément mobile (200) génère une information (203) pour le serveur (400),
• transfert de l'information (203) pour le serveur de l'élément mobile (200) au serveur (400),
• modification de la position (204) de l'élément mobile (200) sur base des instructions (202),
• détermination (101) de la position de l'élément mobile (200) par le système de localisation (100), qui génère une information (102) de position,
• transfert de l'information (102) de position du système (100) de localisation au serveur (400), et
• traitement de données (410) par le serveur (400), incluant la détermination (420) d'une information (402) de projection et la détermination (430) d'une information (403) de caractéristiques, sur base de l'information (203) pour le serveur (400) et de l'information de position (102).

## Patentansprüche

1. System zum Erzeugen einer Umgebung (800) mit einem Bild (600), das so angeordnet ist, dass es von einem oder mehreren Piloten (700) eines oder mehrerer beweglichen Elements (200) wahrgenommen werden kann, wobei das System umfasst:
• das oder die beweglichen Elements (200), die jeweils eine elektronische Schnittstelle (240) umfassen, mit der ein Aktionsmittel (250) verbunden ist;
• ein Projektionssystem (300), das so angeordnet ist, dass es das Bild (600) projiziert ;
• ein Lokalisierungssystem (100), das so angeordnet ist, dass es eine Position jedes beweglichen Elements (200) bestimmt, das sich in der Nähe des Bildes (600) befindet; und
• einen Server (400), der so beschaffen ist, dass er mit der elektronischen Schnittstelle (240) jedes beweglichen Elements (200) und mit dem Lokalisierungssystem (100) verbunden ist und das Aktionsmittel (250) auf der Grundlage der Position jedes beweglichen Elements (200), die von dem Lokalisierungssystem (100) empfangen wurde, steuert ;
**dadurch gekennzeichnet, dass**
der Server (400) auch so angeordnet ist, dass er mit dem Projektionssystem (300) verbunden werden kann und dieses auf der Grundlage der Position jedes beweglichen Elements (200), die von dem Lokalisierungssystem (100) empfangen wird, steuert.

2. System nach Anspruch 1, wobei das Projektionssystem (300) eine Vielzahl von Projektoren (310) umfasst, von denen jeder so angeordnet ist, dass er ein Teilbild (610a - 610e) projiziert, so dass die von den Projektoren (310) projizierten Teilbilder (610a - 610e) sich zumindest teilweise überlappen und das Bild (600) bilden.

3. System nach Anspruch 1 oder 2, wobei das Lokalisierungssystem (100) einen oder mehrere Sensoren (110) umfasst, von denen jeder mit einem von einem oder mehreren Mikrocontrollern (112) verbunden ist, die mit dem Server (400) verbunden sind.

4. System nach Anspruch 3, wobei jeder Mikrocontroller über Ethernet mit dem Server (400) verbunden ist.

5. System nach Anspruch 3, wobei dem jeder Mikrocontroller über ein drahtloses Kommunikationsmittel mit dem Server (400) verbunden ist.

6. System nach einem der Ansprüche 3 bis 5, wobei dem die Sensoren so angeordnet sind, dass sie Signale empfangen, die von einem oder mehreren Sendern (210) ausgesendet werden und es ermöglichen, dass das bewegliche Element (200) durch das Lokalisierungssystem (100) lokalisiert werden kann.

7. System nach Anspruch 6, bei dem jedes bewegliche Element (200) einen solchen Sender (210) umfasst.

8. System nach Anspruch 6 oder 7, wobei jeder Sender (210) mindestens eine Quelle (211) für Infrarotstrahlung umfasst.

9. System nach einem der Ansprüche 3 bis 8, wobei jeder Sensor (110) eine Kamera (114) umfasst, die so angeordnet ist, dass sie ein Bild aufnimmt, und die Infrarotstrahlung erfassen kann.

10. System nach Anspruch 9, wobei jeder Sensor (110) eine Datenverarbeitungsvorrichtung (115) umfasst, die so angeordnet ist, dass sie die Auflösung des von der Kamera (114) aufgenommenen Bildes erhöht.

11. System nach Anspruch 10, wobei jeder Sensor (110) einen infrarotdurchlässigen Filter (113) umfasst.

12. System nach einem der Ansprüche 1 bis 11, wobei jedes beweglichen Element (200) einen Bordcomputer (230) umfasst, der mit einer Antenne verbunden ist, um mit dem Server (400) zu kommunizieren, wobei die Verbindung zwischen der elektronischen Schnittstelle (240) und dem Server (400) über den Bordcomputer (230) läuft.

13. System nach einem der Ansprüche 1 bis 12, wobei jedes bewegliche Element (200) einen Aktuator (220) umfasst, der mit der elektronischen Schnittstelle (240) verbunden und so angeordnet ist, dass er durch den Pilot (700) des beweglichen Elements (200) betätigt wird, wobei der Server (400) so angeordnet ist, dass er auf das Projektionssystem (300) und das Aktionsmittel (250) auf der Grundlage einer Betätigung von mindestens einem Aktuator (220) einwirkt.

14. System nach einem der Ansprüche 1 bis 13, wobei jedes bewegliche Element (200) einen Lautsprecher (259) an einem Körper des beweglichen Elements (200) oder an einem Helm umfasst, der von dem Fahrer des beweglichen Elements (200) getragen werden soll.

15. System nach einem der Ansprüche 1 bis 14, wobei das Bild (600) auf einen Boden (910) projiziert wird und eine Kartbahn (911) umfasst und wobei jedes bewegliche Element (200) ein Gokart ist.

16. Verfahren zum Erzeugen einer Umgebung, die ein Bild (600) umfasst, das so angeordnet ist, dass es von einem oder mehreren Piloten (700) eines oder mehrerer beweglichen Elements (200) wahrgenommen werden kann, wobei das Verfahren einen Zyklus umfasst, der die folgenden Schritte enthält:
• Bestimmung (420) einer Projektionsinformation (402) durch einen Server (400),
• Übertragung der Projektionsinformation (402) an ein Projektionssystem (300),
• Projektion (301) des Bildes (600) durch das Projektionssystem (300) auf der Grundlage der Projektionsinformation (402),
• Bestimmen (430) einer Information (403) von Merkmalen durch den Server (400) für jedes bewegliche Element (200),
• Übertragen der Merkmalsinformation (403) an das entsprechende bewegliche Element (200),
• Anpassen (205) von Merkmalen des beweglichen Elements (200) auf der Grundlage der Merkmalinformation (403),
• Empfangen von Anweisungen (202) von einem Treiber des beweglichen Elements (200), die bewirken, dass das bewegliche Element (200) eine Information (203) für den Server (400) erzeugt,
• Übertragen der Information (203) für den Server von dem bewegliche Element (200) zu dem Server (400),
• Änderung der Position (204) des beweglichen Elements (200) auf der Grundlage der Anweisungen (202),
• Bestimmung (101) der Position des beweglichen Elements (200) durch das Lokalisierungssystem (100), das eine Positionsinformation (102) erzeugt,
• Übertragen der Positionsinformationen (102) vom Lokalisierungssystem (100) zum Server (400), und
• Verarbeiten von Daten (410) durch den Server (400), einschließlich des Bestimmens (420) einer Projektionsinformation (402) und des Bestimmens (430) einer Merkmalsinformation (403), basierend auf der Information (203) für den Server (400) und der Positionsinformation (102).

## Claims

1. A system for creating an environment (800) comprising an image (600) arranged to be perceptible to one or more drivers (700) of one or more mobile elements (200), the system comprising:
• the mobile element(s) (200), each comprising an electronic interface (240) to which an action means (250) is connected;
• a projection system (300) arranged to project the image (600);
• a location system (100) arranged to determine a position of each mobile element (200) present in the vicinity of the image (600); and
• a server (400) arranged to be connected to the electronic interface (240) of each mobile element (200) and to the location system (100), and to control the action means (250) on the basis of the position of each mobile element (200) received from the location system (100);
**characterised in that**
the server (400) is also arranged to be connected to the projection system (300) and to control the latter on the basis of the position of each mobile element (200) received from the location system (100).

2. The system according to claim 1, wherein the projection system (300) comprises a plurality of projectors (310) each of which is arranged to project a partial image (610a - 610e), such that the partial images (610a - 610e) projected by the projectors (310) at least partially overlap and form the image (600).

3. The system according to claim 1 or 2, wherein the location system (100) comprises one or more sensors (110) each of which is connected to one of one or more microcontrollers (112) connected to the server (400).

4. The system according to claim 3, wherein each microcontroller is connected to the server (400) via Ethernet.

5. The system according to claim 3, wherein each microcontroller is connected to the server (400) via wireless communication means.

6. The system according to any one of the claims 3 to 5, in which the sensors are arranged to receive signals emitted by one or more emitters (210) enabling the mobile element (200) to be located by the location system (100).

7. The system according to claim 6 in which each mobile element (200) comprises such an emitter (210).

8. The system according to claim 6 or 7, wherein each emitter (210) comprises at least one source (211) of infra-red radiation.

9. The system according to any one of the claims 3 to 8, wherein each sensor (110) comprises a camera (114) arranged to take an image and capable of detecting infra-red radiation.

10. The system according to claim 9, wherein each sensor (110) comprises a data processing device (115) arranged to increase the resolution of the image taken by the camera (114).

11. The system according to claim 10, wherein each sensor (110) comprises a filter (113) allowing infrared to pass through.

12. The system according to any one of the claims 1 to 11, wherein each mobile element (200) comprises an on-board computer (230) connected to an antenna for communicating with the server (400), the connection between the electronic interface (240) and the server (400) passing via the on-board computer (230).

13. The system according to any one of the claims 1 to 12, wherein each mobile element (200) comprises an actuator (220) connected to the electronic interface (240) and arranged to be actuated by the driver (700) of the mobile element (200), the server (400) being arranged to act on the projection system (300) and on the action means (250) on the basis of actuation of at least one actuator (220).

14. The system according to any one of the claims 1 to 13, wherein each mobile element (200) comprises a loudspeaker (259) on a body of the mobile element (200) or on a helmet intended to be worn by the driver of the mobile element (200).

15. The system according to any one of the claims 1 to 14, wherein the image (600) is projected onto a floor (910) and comprises a karting track (911), and wherein each mobile element (200) is a kart.

16. A method of creating an environment comprising an image (600) arranged to be perceptible by one or more drivers (700) of one or more mobile elements (200), the method comprising a cycle including the following steps:
• determination (420) of projection information (402) by a server (400),
• transfer of the projection information (402) to a projection system (300),
• projection (301) of the image (600) by the projection system (300) on the basis of the projection information (402),
• determination (430) of characteristic information (403) by the server (400) for each mobile element (200),
• transfer of the characteristic information (403) to the corresponding mobile element (200),
• adaptation (205) of characteristics of the mobile element (200) on the basis of the characteristic information (403),
• receiving instructions (202) from a driver of the mobile element (200), which cause the mobile element (200) to generate information (203) for the server (400),
• transfer of information (203) for the server from the mobile element (200) to the server (400),
• modification of the position (204) of the mobile element (200) on the basis of the instructions (202),
• determination (101) of the position of the mobile element (200) by the location system (100), which generates position information (102),
• transfer of position information (102) from the location system (100) to the server (400), and
• data processing (410) by the server (400), including the determination (420) of projection information (402) and the determination (430) of characteristic information (403), on the basis of the information (203) for the server (400) and of the position information (102).
